# EUROPÄISCHE PATENTSCHRIFT

(11) **EP 3 884 822 B1**
(45) Veröffentlichungstag und Bekanntmachung des Hinweises auf die Patenterteilung: **01.11.2023**
(21) Anmeldenummer: 20175328.2
(22) Anmeldetag: 19.05.2020
(51) Int. Cl.: A47J 43/046, A47J 43/08

(54) **SYSTEM MIT KÜCHENMASCHINE UND HAUSHALTSRÜHRGERÄT**
SYSTEM WITH KITCHEN APPLIANCE AND DOMESTIC MIXER
SYSTÈME POURVU DE ROBOT DE CUISINE ET AGITATEUR ÉLECTROMÉNAGER

(30) Priorität: 26.03.2020 EP 20165974
(43) Veröffentlichungstag der Anmeldung: 29.09.2021
(73) Patentinhaber: Vorwerk & Co. Interholding GmbH, 42270 Wuppertal (DE)
(72) Erfinder: POHL, Stephan, 42113 Wuppertal (DE)
(74) Vertreter: Gille Hrabal Partnerschaftsgesellschaft mbB Patentanwälte

(56) Entgegenhaltungen:
- EP-A1- 2 269 494
- EP-A2- 0 832 594
- CN-A- 109 381 064
- DE-U1-202014 101 885

## Beschreibung

Die Erfindung betrifft ein System für einen Haushalt mit einer Küchenmaschine und einem Rührgerät. Es ist ferner ein Standteil für das Rührgerät offenbart.

Aus der Druckschrift EP 1 639 928 A1 ist eine Küchenmaschine mit einem Gefäß bekannt. Das Gefäß weist einen Messersatz auf. Die Küchenmaschine kann Zutaten einer Speise, die sich in dem Gefäß befinden, zerkleinern, malen oder lediglich rühren. Damit Zutaten einer Speise zerkleinert werden können, muss der Messersatz mit hoher Drehgeschwindigkeit und großem Drehmoment in Richtung seiner scharfen Kante gedreht werden können. Entsprechend leistungsstark ist der elektrische Antrieb einer solchen Küchenmaschine ausgewählt.

Aus der Druckschrift CH 702 302 A2 ist ein Rührwerk für eine Küchenmaschine mit einem Permanent-Synchronmotor bekannt. Der Permanent-Synchronmotor umfasst eine Mehrzahl von Permanentmagneten, die in gleichmäßigen Abständen am Umfang des Rotors des Elektromotors angeordnet sind.

Bekannt ist eine Gebrauchsanleitung "THERMOMIX^{®} TM6 der Firma VORWERK INTERNATIONAL STRECKER & CO. 02/19", die eine Küchenmaschine mit einem herausnehmbaren Gefäß offenbart. Für das Gefäß gibt es verschiedene Zubehörteile wie einen Gareinsatz, einen Varoma^{®} Behälter, einen Varoma^{®} Einlegeboden, einen Rühraufsatz, um viele verschiedene Speise zubereiten zu können.

Kann eine Küchenmaschine eine Vielzahl von Arbeitsschritten wie Rühren, Zerkleinern und Erhitzen ausführen, so können mit dieser eine große Vielzahl von unterschiedlichen Speisen zubereitet werden. Insbesondere bei einer vielseitig einsetzbaren Küchenmaschine besteht daher Bedarf, über mehr als ein Gefäß zu verfügen. Wird eine Speise in einem ersten Gefäß zubereitet, so kann ein zweites Gefäß für eine parallele Zubereitung einer zweiten Speise genutzt werden, ohne dass umgefüllt oder ein Gefäß zwischendurch gereinigt werden muss.

Ein Rührgerät, welches ein Gefäß und ein Rührwerkzeug umfasst, ist aus der Druckschrift DE 10 2009 016 897 A1 bekannt. Das Rührwerkzeug ist in ein Aufsatzteil für das Gefäß integriert. Das Aufsatzteil umfasst als Antrieb einen Piezo-Schrittmotor. Ein Piezo-Schrittmotor ist relativ klein und leicht. Weitere Rüchenmaschinen und Rührgeräte sind aus den Druckschriften EP 0 832 594 A2, DE 20 2014 101 885 U1, EP 2 269 494 A1 und CN 109 381 064 A bekannt.

Bei der Zubereitung von ein oder mehreren Speisen besteht regelmäßig Bedarf, erste Zutaten rühren und zweite Zutaten zerkleinern und/oder rühren zu müssen. Ist nur eine Küchenmaschine vorhanden, so müssen diese Schritte zeitlich hintereinander durchgeführt werden. Durch Vorsehen einer zweiten Küchenmaschine könnte zwar dieses Problem gelöst werden. Eine zweite Küchenmaschine zur Lösung des Problems vorzusehen, ist jedoch wenig zweckmäßig, da das volle Potential einer solchen Küchenmaschine zu selten zeitgleich ausgeschöpft werden muss.

Die vorliegende Erfindung soll die Zubereitung einer Speise mit einem angemessenen technischen Aufwand vereinfachen und beschleunigen.

Zur Lösung des Problems wird ein System mit den Merkmalen des ersten Patentanspruchs vorgesehen. Vorteilhafte Ausgestaltungen ergeben sich aus den abhängigen Ansprüchen.

Die Erfindung betrifft ein System umfassend ein Standteil einer Küchenmaschine und ein Standteil eines Rührgeräts und mindestens ein Gefäß mit einem darin befindlichen Rührwerkzeug. Das Gefäß kann sowohl als Teil der Küchenmaschine als auch als Teil des Rührgeräts verwendet werden. Damit ist gemeint, dass das Gefäß in das Standteil der Küchenmaschine eingesetzt sein kann und dann zunächst Teil der Küchenmaschine ist. Das Gefäß kann aber von dem Standteil der Küchenmaschine entfernt werden und in das Standteil des Rührgeräts eingesetzt werden. Das Gefäß ist dann Teil des Rührgeräts. Es ist dadurch möglich, das Gefäß in Abhängigkeit vom Bedarf auch während einer Zubereitung einer Speise zunächst als Teil der Küchenmaschine und später als Teil des Rührgeräts einzusetzen oder umgekehrt. Sollen gleiche Zutaten bearbeitet werden, entfällt ein Umfüllen der Zutaten von dem Gefäß einer Küchenmaschine in das Gefäß eines Rührgeräts oder umgekehrt.

Die Küchenmaschine ist vorteilhaft so eingerichtet, dass das Rührwerkzeug von der Küchenmaschine mit höheren Drehzahlen gedreht werden kann im Vergleich zu den Drehzahlen, die mit dem Rührgerät maximal möglich sind. Weil das Rührgerät bei dieser Ausgestaltung aufgrund der geringen Drehzahlen keinen großen Motor benötigt, ist es möglich, das Standteil des Rührgeräts besonders klein im Vergleich zum Standteil der Küchenmaschine zu bauen. Der Platzbedarf, der für das Standteil des Rührgeräts zusätzlich zu dem Platzbedarf für die Küchenmaschine aufgewendet werden muss, ist daher gering.

Die maximal mögliche Drehgeschwindigkeit, mit der die Küchenmaschine das Rührwerkzeug drehen kann, ist vorzugsweise wenigstens fünfmal größer als die maximal mögliche Drehgeschwindigkeit, mit der das Rührgerät das Rührwerkzeug drehen kann. Kann also beispielsweise das Rührgerät das Rührwerkzeug mit bis zu 1000 Umdrehungen pro Minute drehen, dann kann die Küchenmaschine das Rührwerkzeug mit wenigstens 5000 Umdrehungen pro Minute drehen.

Standteil meint ein Teil des Rührgeräts bzw. der Küchenmaschine, welches für ein Aufstellen auf einem Untergrund, also zum Beispiel auf einer Arbeitsplatte, vorgesehen ist. Ein Standteil kann daher an seine Unterseite beispielsweise vorstehende Noppen aufweisen. Die Noppen kontaktieren im aufgestellten Zustand den Untergrund. Die Noppen können aus einem Elastomer bestehen, um das Standteil rutschfest aufstellen zu können und um Vibrationen zu dämpfen.

Vorzugsweise ist die maximal mögliche Drehgeschwindigkeit, mit der die Küchenmaschine das Rührwerkzeug drehen kann, wenigstens zehnmal größer oder sogar wenigstens 20 mal größer als die maximal mögliche Drehgeschwindigkeit, mit der das Rührgerät das Rührwerkzeug drehen kann.

Um den Bauraum für das Standteil des Rührgeräts besonders klein halten zu können, ist das Rührgerät vorzugsweise so ausgelegt, dass die maximal mögliche Drehgeschwindigkeit des Rührwerkzeugs 1000 Umdrehungen pro Minute beträgt, mit der das Rührgerät das Rührwerkzeug drehen kann. Wird diese Drehzahl nicht überschritten, so kann als Antrieb beispielsweise ein Schrittmotor eingesetzt werden. Die Welle des Schrittmotors kann typischerweise mit einer Drehgeschwindigkeit von 1000 Umdrehungen pro Minute gedreht werden, ohne dass dann sein Drehmoment für die Anwendungsfälle zu gering ist. Ein Getriebe ist bei dieser Ausgestaltung nicht erforderlich. Dadurch kann vorteilhaft auch die Bauhöhe des Rührgeräts klein gehalten werden. Dies führt zu einem tiefen Schwerpunkt, was für das Rührgerät für einen störungsfreien Betrieb von besonderer Wichtigkeit ist, weil das Standteil des Rührgeräts vergleichsweise klein ist und daher relativ leicht ist im Vergleich zum Standteil der Küchenmaschine.

Vorzugsweise beträgt die maximal mögliche Drehgeschwindigkeit, mit der das Rührgerät das Rührwerkzeug drehen kann, nicht mehr als 400 Umdrehungen pro Minute. Bezogen auf üblichen Bauhöhen von Gefäßen, die bei Küchenmaschinen eingesetzt werden, ist es dann nicht erforderlich, das Gefäß des Rührgeräts (welches auch das Gefäß der Küchenmaschine sein kann) mit einem Deckel fest zu verschließen, damit keine Zutaten einer Speise aus dem Gefäß herausgeschleudert werden können. Ein Verriegelungsmechanismus für einen Deckel kann daher beim Rührgerät eingespart werden. Dann kann der Deckel vom Gefäß des Rührgeräts jederzeit beispielsweise durch Anheben entfernt werden. Es muss also nicht erst ein Verriegelungsmechanismus entriegelt werden, um den Deckel entfernen zu können.

Übliche Bauhöhen für das Gefäß liegen zwischen 10 cm und 30 cm. Beträgt der Abstand zwischen der Oberkante des Gefäßes und dem Boden des Gefäßes wenigstens 10 cm, so ist dies regelmäßig ausreichend, damit Zutaten einer Speise nicht durch Drehen des Rührwerkszeugs herausgeschleudert werden, wenn die Drehgeschwindigkeit nicht mehr als 400 Umdrehungen pro Minute beträgt. Vorzugsweise beträgt der Abstand zwischen der Oberkante des Gefäßes und dem Boden des Gefäßes wenigstens 15 cm.

Steht das Gefäß auf einem Untergrund auf, dann kann der Boden des Gefäßes einen Abstand zum Untergrund aufweisen. Die Gesamthöhe des Gefäßes ist dann größer als Abstand zwischen der Oberkante des Gefäßes und dem Boden des Gefäßes. Diese Ausgestaltung ermöglicht es, unterhalb des Bodens beispielsweise elektrische Kontakte vorzusehen. Elektrische Kontakte können mit einem Sensor des Gefäßes verbunden sein. Der Sensor kann ein Temperatursensor sein, um die Temperatur des Gefäßes messen zu können. Elektrische Kontakte können mit einer Heizeinrichtung des Gefäßes verbunden sein. Über die elektrischen Kontakte kann dann elektrischer Strom zur Heizeinrichtung für ein Erhitzen des Gefäßes geleitet werden.

Durch einen Verriegelungsmechanismus im Sinne der Erfindung kann ein Deckel verriegelt werden, wenn der Deckel das Gefäß verschließt. Der Deckel kann dann nicht vom Gefäß entfernt werden. Ist ein solcher Verriegelungsmechanismus beim Rührgerät nicht vorhanden, weil dies nicht erforderlich ist, so kann dies zusätzlich dazu beitragen, dass der Bauraum für das Standteil des Rührgeräts klein gehalten werden kann. Dies gilt insbesondere im Vergleich zu dem Fall, dass die Küchenmaschine einen motorisch angetriebenen Verriegelungsmechanismus für den Deckel umfasst. Ein motorisch angetriebener Verriegelungsmechanismus benötigt besonders viel Bauraum. Auf einen gleichen Verriegelungsmechanismus nun beim Rührgerät verzichten zu können, erspart dann besonders viel Bauraum beim Standteil des Rührgeräts.

Vorzugsweise umfasst die Küchenmaschine einen motorisch angetriebenen Verriegelungsmechanismus für den Deckel des Gefäßes. Ein motorisch angetriebener Verriegelungsmechanismus ist von Vorteil, um eine Speise zumindest teilautomatisiert zubereitet zubereiten zu können. Es kann dann durch eine Steuerung der Küchenmaschine automatisiert verriegelt und entriegelt werden. Diese Ausgestaltung der Erfindung ist also von besonderem Vorteil, wenn als Verriegelungsmechanismus im Fall der Küchenmaschine ein motorisch angetriebener Verriegelungsmechanismus vorgesehen ist und ein Verriegelungsmechanismus beim Rührgerät für einen Deckel des Gefäßes nicht vorhanden ist.

Der Deckel kann eine Öffnung haben. Durch die Öffnung hindurch können dann Zutaten wie Gewürze in das Gefäß gebracht werden, wenn der Deckel ansonsten das Gefäß verschließt. Der Durchmesser des Öffnung kann beispielsweise 1 cm bis 8 cm betragen, wenn der Durchmesser des Deckels 15 cm bis 25 cm beträgt.

Besonders bevorzugt beträgt die maximal mögliche Drehgeschwindigkeit, mit der das Rührgerät das Rührwerkzeug drehen kann, nicht mehr als 220 Umdrehungen pro Minute. Hierdurch wird erreicht, dass Zutaten einer Speise während eines Rührens kaum nach oben geschleudert werden. Nach oben geschleuderte Zutaten, die dann an der Innenwand des Gefäßes haften bleiben können, nehmen nicht am Rührvorgang teil. Dieses Problem wird vermieden, indem die Umdrehungszahl auf 220 Umdrehungen pro Minute beschränkt wird. Höhere Umdrehungszahlen sind nicht erforderlich, da für höhere Umdrehungszahlen die Küchenmaschine zur Verfügung steht. Es hat sich außerdem herausgestellt, dass für die parallele Zubereitung von Speisen nur selten Bedarf besteht, mit mehr als 220 Umdrehungen pro Minute gleichzeitig mit Hilfe von zwei verschiedenen Geräten drehen zu müssen. Auch aufgrund dieser Erkenntnis ist die Beschränkung der maximal möglichen Drehgeschwindigkeit auf 220 Umdrehungen pro Minute von besonderem Vorteil.

Vorzugsweise beträgt die maximal mögliche Drehgeschwindigkeit, mit der die Küchenmaschine das Rührwerkzeug drehen kann, wenigstens 5000 Umdrehungen pro Minute, besonders bevorzugt wenigstens 8000 Umdrehungen pro Minute, um nicht nur rühren, sondern auch zerkleinern zu können. Vorzugsweise beträgt die maximal mögliche Drehgeschwindigkeit, mit der die Küchenmaschine das Rührwerkzeug drehen kann, nicht mehr 16000 Umdrehungen pro Minute, besonders bevorzugt nicht mehr als 13000 Umdrehungen pro Minute, da dann der technische Aufwand im Vergleich zum Nutzen zu hoch wird.

In einer Ausgestaltung der Erfindung können die Drehzahlen der Drehgeschwindigkeit bei der Küchenmaschine und/oder bei dem Rührgerät stufenlos verstellt werden. Beträgt also die maximal mögliche Drehgeschwindigkeit im Fall des Rührgeräts 200 Umdrehungen pro Minute, so kann diese Drehgeschwindigkeit stufenlos bis auf Null reduziert werden. Beträgt die maximal mögliche Drehgeschwindigkeit im Fall der Küchenmaschine beispielsweise 12000 Umdrehungen pro Minute, so kann diese Drehgeschwindigkeit stufenlos bis auf null reduziert werden.

Es ist aber zu bevorzugen, dass die Drehzahlen der Drehgeschwindigkeit bei der Küchenmaschine und/oder bei dem Rührgerät nur stufenförmig verstellt werden können. Die Bedienung kann so einfach gehalten werden. Bedienungsfehler können reduziert werden. Für die Zubereitung von Speisen ist es außerdem nicht erforderlich, Drehgeschwindigkeiten stufenlos verstellen zu können.

Damit das Rührgerät besonders einfach bedient werden kann, ohne dass Bedienfehler zu befürchten sind, können beim Rührgerät vorzugsweise maximal drei, vorzugsweise maximal zwei verschiedenen Drehgeschwindigkeiten für das Rührgerät eingestellt werden. In einer Ausgestaltung der Erfindung liegt beispielsweise die Drehgeschwindigkeit in einer ersten Stufe zwischen 80 bis 120 Umdrehungen pro Minute und die Drehgeschwindigkeit in einer zweiten Stufe zwischen 180 und 220 Umdrehungen pro Minute.

Vorzugsweise gibt es bei der Küchenmaschine gleiche Stufen für die Drehgeschwindigkeit wie bei dem Rührgerät. Soll beispielsweise gemäß einem Rezept mit einer Stufe 1 gerührt werden, dann kommt es bei dieser Ausgestaltung nicht darauf an, auf welches Gerät sich diese Angabe bezieht, wenn die Stufe 1 bei der Küchenmaschine der Stufe 1 bei dem Rührgerät entspricht. Gibt es also bei dem Rührgerät eine Stufe 1 mit einer Umdrehungszahl, die zwischen 80 bis 120 Umdrehungen pro Minute liegt, dann gibt es bei der Küchenmaschine ebenfalls eine Stufe 1 mit einer Umdrehungszahl, die zwischen 80 bis 120 Umdrehungen pro Minute liegt. Gibt es bei dem Rührgerät eine Stufe 2 mit einer Umdrehungszahl, die zwischen 180 bis 220 Umdrehungen pro Minute liegt, dann gibt es bei der Küchenmaschine ebenfalls eine Stufe 2 mit einer Umdrehungszahl, die zwischen 180 bis 220 Umdrehungen pro Minute liegt. Gleiche Stufen für die Drehgeschwindigkeit bedeutet nicht, dass die Drehgeschwindigkeiten bei einer Stufe 1 oder einer Stufe 2 exakt gleich sein müssen. Geringe Unterschiede von beispielsweise bis zu 20% sind für die Zubereitung von Speisen nämlich unschädlich. Regelmäßig sind Unterschiede sogar zu bevorzugen, um beispielsweise akustische Vorteile zu erzielen. So sollen beispielsweise Resonanzfrequenzen vermieden werden. Diese können unterschiedlich sein, da Küchenmaschine und Rührgerät unterschiedlich gebaut sind. Aus diesem Grund ist es beispielsweise möglich, dass bei der Stufe 1 bei der Küchenmaschine mit 100 Umdrehungen pro Minute gerührt wird und bei der Stufe 1 bei dem Rührgerät lediglich mit 80 Umdrehungen pro Minute gerührt wird, um beispielsweise akustische Vorteile zu erzielen.

Die Steuerung für die Drehgeschwindigkeiten und der Antrieb für das Rührwerkzeug befinden sich im jeweiligen Standteil. Das Standteil des Rührgeräts kann dann also so eingerichtet sein, dass nur mit einer Stufe 1 und einer Stufe 2 gedreht werden kann. Das Standteil des Rührgeräts kann so eingerichtet sein, dass nur mit einer Stufe 1, einer Stufe 2 und einer Stufe 3 gedreht werden kann. Das Standteil des Rührgeräts kann so eingerichtet sein, dass nur mit einer Stufe 1, nur mit einer Stufe 2 oder nur mit einer Stufe 3 gedreht werden kann. Das Standteil der Küchenmaschine kann so eingerichtet sein, dass mit einer Stufe 1, einer Stufe 2, einer Stufe 3, einer Stufe 4 usw. gedreht werden kann.

Die Drehgeschwindigkeit der untersten Stufe 1 sollte wenigstens 50 Umdrehungen pro Minute betragen, da geringere Drehgeschwindigkeiten von zu geringem Nutzen sind.

Grundsätzlich ist im Fall der Küchenmaschine die Anzahl der Stufen für die Drehgeschwindigkeit größer als die die Anzahl der Stufen für die Drehgeschwindigkeit im Fall des Rührgeräts. Vorzugsweise ist die Anzahl der Stufen im Fall der Küchenmaschine wenigstens doppelt so groß, besonders bevorzugt wenigstens dreimal so groß. Gibt es also im Fall des Rührgeräts zwei Stufen für die Drehgeschwindigkeit, so zum Beispiel die zuvor beschriebene Stufe 1 und Stufe 2, dann gibt es im Fall der Küchenmaschine wenigstens vier Stufen für die Drehgeschwindigkeit, besonders bevorzugt wenigstens sechs Stufen für Drehgeschwindigkeiten.

Vorzugsweise ist die unterste Stufe, also die Stufe für die geringste Drehgeschwindigkeit, im vorgenannten Sinne bei der Küchenmaschine und beim Rührgerät gleich. Die zuvor beschriebene Stufe 1 kann die unterste Stufe sein, also die Stufe mit der geringsten Drehgeschwindigkeit. Sowohl das Rührgerät als auch die Küchenmaschine können dann mit der Stufe 1 betrieben werden. Eine geringere Drehgeschwindigkeit, die von Null verschieden ist, ist dann bei beiden Geräten nicht möglich.

Bei der Küchenmaschine sind also grundsätzlich mehr als drei Stufen für die Drehgeschwindigkeit vorhanden, so zum Beispiel wenigstens acht Stufen, besonders bevorzugt wenigstens 10 Stufen. Eine Unterteilung in mehr als 40 Stufen ist allerdings grundsätzlich nicht vorgesehen, da in der Praxis kein Bedarf für noch genauere Unterteilungen besteht. Gibt es gleiche Stufen für die Drehgeschwindigkeit bei der Küchenmaschine und dem Rührgerät, so umfasst insbesondere die Küchenmaschine auch Stufen für die Drehgeschwindigkeit, die bei dem Rührgerät nicht vorhanden sind. Dies gilt vor allem dann, wenn das Standteil der Küchenmaschine mit höherer Drehgeschwindigkeit drehen kann im Vergleich zum Stand des Rührgeräts. Dann gibt es bei der Küchenmaschine ein oder mehrere zusätzliche Stufen, die bei dem Rührgerät nicht vorhanden sind, um mithilfe dieser zusätzlichen Stufen mit entsprechend höheren Drehgeschwindigkeiten das Rührwerkzeug drehen zu können. Eine oder mehrere zusätzliche Stufen bei der Küchenmaschine können aber auch so sein, dass mit geringeren Geschwindigkeiten das Rührwerkzeug gedreht werden kann. Die Küchenmaschine kann dann das Rührwerkzeug mit kleinerer Geschwindigkeit drehen als das Rührgerät.

Im Fall der Küchenmaschine kann die Drehgeschwindigkeit von Stufe zu Stufe beispielsweise exponentiell zunehmen. Eine lediglich lineare Zunahme von Stufe zu Stufe hat sich im Fall der Küchenmaschine für die Zubereitung von Speisen in der Praxis nicht bewährt. So kann beispielsweise bei einer Stufe 1 mit einer Drehgeschwindigkeit zwischen 80 bis 120 Umdrehungen pro Minute, bei einer Stufe 2 mit einer Drehgeschwindigkeit zwischen 180 bis 220 Umdrehungen pro Minute, bei einer Stufe 3 mit einer Drehgeschwindigkeit zwischen 470 bis 530 Umdrehungen pro Minute und bei einer letzten Stufe mit einer Drehgeschwindigkeit zwischen 10000 bis 12000 Umdrehungen pro Minute gedreht werden.

In einer Ausgestaltung ist das Rührwerkzeug mit einer Drucksicherung ausgestattet. Es gibt bei dieser Ausgestaltung einen Schwellwert für ein Drehmoment, welches das Rührwerkzeug von seinem Antrieb auf Zutaten einer Speise übertragen kann. Wird der Schwellwert des Drehmoments zumindest für einen vorgegeben Zeitraum überschritten, so hat die Drucksicherung zur Folge, dass die Welle des Antriebs drehen kann, ohne dass das Rührwerkzeug mit gleicher Geschwindigkeit mitgedreht werden kann. Wird beispielsweise das Drehen des Rührwerkzeugs für beispielsweise 5 Sekunden blockiert, so bewirkt die Drucksicherung, dass nach Ablauf des Zeitraums von 5 Sekunden die Welle des Antriebs drehen kann, ohne dass das Rührwerkzeug dann ebenfalls gedreht wird. Auf diese Weise werden Beschädigungen beim Antrieb der Küchenmaschine und/oder beim Antrieb des Rührgeräts vermieden, wenn das Rührwerkzeug blockiert wird. Die Drucksicherung kann eine Berstsicherung sein. Die Drucksicherung kann also eine Sollbruchstelle aufweisen, die bricht, wenn der Schwellwert für das Drehmoment für einen vorgegebenen Zeitraum überschritten wird. Im Anschluss an das Brechen der Sollbruchstelle gibt es dann beispielsweise keine drehfeste Verbindung zwischen der Welle des Rührwerkzeugs und dem Werkzeug des Rührwerkzeugs. Wird danach die Welle des Rührwerkszeugs angetrieben, dann kann diese unabhängig von dem Werkzeug des Rührwerkzeugs gedreht werden.

Vorzugsweise weist das Standteil des Rührgeräts aus Sicherheitsgründen selbst dann eine Steuerung für die Begrenzung eines Drehmoments für seinen Antrieb auf, wenn das Rührwerkzeug eine Drucksicherung umfasst. Durch die Steuerung wird die Leistung des elektrischen Antriebs auf einen Maximalwert begrenzt. So kann beispielsweise die Steuerung so eingerichtet sein, dass diese eine Drehzahl des Rührwerkzeugs durch Regelung der Stromstärke für den elektrischen Antrieb konstant hält, aber die maximal mögliche Stromstärke auf zum Beispiel 0,8 A oder 1 A begrenzt. Der Maximalwert für die Stromstärke und damit der Maximalwert für das Drehmoment sind grundsätzlich so gewählt, dass das Rührgerät Zutaten einer Speise nur mit einem kleinen Drehmoment rühren kann im Vergleich zu dem Drehmoment, mit dem Zutaten einer Speise im Fall der Küchenmaschine bearbeitet werden können. Es wird dem Umstand Rechnung getragen, dass für ein Rühren grundsätzlich nur geringe Drehmomente für die Zubereitung einer Speise aufzuwenden sind. Das maximal mögliche Drehmoment kann beispielsweise 0,5 N*m betragen.

Vorzugsweise weist das Standteil des Rührgeräts eine Abschalteinrichtung auf. Die Abschalteinrichtung schaltet die Stromzufuhr für den elektrischen Antrieb automatisiert ab, wenn der vorgenannte Maximalwert für die Stromstärke bzw. für das Drehmoment erreicht wird oder zumindest für eine vorgegebene Zeitspanne erreicht wird. Die Zeitspanne kann beispielsweise zwei bis zehn Sekunden, so zum Beispiel fünf Sekunden, betragen. Wird der vorgenannte Maximalwert dann fünf Sekunden lang erreicht, so schaltet die Abschalteinrichtung die Stromzufuhr für den elektrischen Antrieb automatisiert ab.

Vorzugsweise schaltet die Abschalteinrichtung aus Sicherheitsgründen dann nicht nur die Stromzufuhr für den elektrischen Antrieb automatisiert ab, sondern auch die Stromzufuhr zu anderen Verbrauchern von elektrischer Energie.

Ein anderer elektrischer Verbraucher kann eine elektrische Heizeinrichtung des Rührgeräts sein, mit der das Gefäß erhitzt werden kann. Das Gefäß kann dann eine Heizeinrichtung umfassen und elektrische Kontakte. Ein Standteil des Rührgeräts kann dann entsprechende elektrische Kontakte aufweisen. Ist das Gefäß in das Standteil des Rührgeräts eingesetzt, so sind dann die elektrischen Kontakte des Rührgeräts mit den elektrischen Kontakten des Gefäßes verbunden. Vom Standteil des Rührgeräts kann dann Strom zur Heizeinrichtung zugeführt werden, um dadurch das Gefäß zu erhitzen.

Auch das Standteil der Küchenmaschine kann gleiche elektrische Kontakte aufweisen, um das Gefäß erhitzen zu können.

Weist das Rührwerkzeug eine Drucksicherung auf, dann ist der Maximalwert für die vorgenannte Leistungsbegrenzung so klein gewählt, dass dieser die Drucksicherung nicht auslösen kann. Es wird dem Umstand Rechnung getragen, dass es möglich sein soll, mit der Küchenmaschine höhere Drehmomente für die Zubereitung von Speisen bereitstellen zu können, so zum Beispiel für ein Kneten von Teig. Für ein Kneten von Teig ist das Rührgerät aufgrund seiner Leistungsbegrenzung dagegen nicht geeignet.

Um Sicherheitsanforderungen besonders gut erfüllen zu können, beträgt das Drehmoment, welches das Rührgerät mittels seines Rührwerkzeugs aufbringen kann, maximal 1 N*m, vorzugsweise maximal 0,5 N*m. Besonders bevorzugt beträgt das maximale Drehmoment nicht mehr als 0,4 N*m, um das Rührgerät sogar problemlos ohne Deckel betreiben zu können, ohne das dem Sicherheitsbedenken im Wege stehen könnten. Das Gefäß des Rührgeräts ist dann also während des Betriebs nach oben offen.

Um mit hinreichend großer Kraft rühren zu können, ist eine Steuerung für die Begrenzung eines Drehmoments so ausgelegt, dass das Drehmoment des Rührwerkzeugs wenigstens 0,1 N*m, vorzugsweise wenigsten 0,2 N*m, besonders bevorzugt wenigstens 0,3 N*m, betragen kann. Hierdurch ist sichergestellt, dass übliche Zutaten einer Speise mit der erforderlichen Kraft durch das Rührgerät gerührt werden können.

In einer Ausgestaltung der Erfindung kann das Drehmoment des Rührwerkzeugs der Küchenmaschine mehr als 2 N*m betragen, so zum Beispiel wenigstens 2,5 N*m oder 3 N*m. Ein solches Drehmoment erlaubt beispielsweise ein Kneten von Teig.

Vorzugsweise ist vor allem die Stellfläche des Standteils des Rührgeräts kleiner als die Stellfläche des Standteils der Küchenmaschine. In einer Küche kommt es vor allem darauf an, die Stellfläche klein zu halten, die für die Unterbringung von Küchengeräten benötigt wird. Daher ist es von besonderem Vorteil, dass die Stellfläche des Standteils des Rührgeräts klein ist im Vergleich zur Stellfläche des Standteils der Küchenmaschine.

Mit Stellfläche ist die Fläche gemeint, die benötigt wird, um das Standteil der Küchenmaschine bzw. das Standteil des Rührgeräts bestimmungsgemäß auf einem Untergrund, so zum Beispiel auf einer Arbeitsplatte in einer Küche, abstellen können.

Länge und Breite der Stellfläche des Standteils des Rührgeräts sind vorzugsweise kaum größer, besonders bevorzugt nicht größer, als die maximale Länge und die maximale Breite des Gefäßes und zwar in Aufsicht auf das Gefäß bzw. des Rührgeräts gesehen. Aus eingangs genannten Gründen besteht ohnehin häufig Bedarf für ein zweites Gefäß für den Betrieb der Küchenmaschine. Gerade in diesen Fällen wird dann durch das Standteil des Rührgeräts so gut wie kein zusätzlicher Platz benötigt.

Länge und Breite der Stellfläche des Standteils des Rührgeräts entsprechen vorzugsweise der maximalen Länge und Breite des Gefäßes. Einerseits wird dadurch ein zusätzlicher Platzbedarf für das Standteil des Rührgeräts geringgehalten. Andererseits wird dann die Stellfläche so maximiert, dass eine hinreichende Standsicherheit für das Rührgerät während des Betriebs erreicht werden kann.

Die Stellfläche des Standteils des Rührgeräts kann bis zu 35 cm lang sein, um den Platzbedarf geeignet gering zu halten. Die Stellfläche des Standteils des Rührgeräts kann bis zu 25 cm breit sein, um den Platzbedarf gering zu halten. Die Stellfläche des Standteils des Rührgeräts sollte wenigstens 20 cm lang sein, um eine hinreichende Standsicherheit erreichen zu können. Die Stellfläche des Standteils des Rührgeräts sollte wenigstens 15 cm breit sein, um eine hinreichende Standsicherheit erreichen zu können.

Zwar genügt für den Betrieb des Systems bereits ein Gefäß. In der Praxis sind aber häufig bereits zwei Gefäße allein deshalb vorhanden, um mit der Küchenmaschine eine Mehrzahl von Speisen ohne große Mühe parallel zubereiten zu können. Für ein zweites Gefäß muss eine zweite Stellfläche bereitgestellt werden. Kann das zweite Gefäß nicht nur in das Standteil der Küchenmaschine, sondern auch in das Standteil des Rührgeräts eingesetzt werden, dann hat das Vorhandensein des Rührgeräts nicht zur Folge, dass die ohnehin benötigte Stellfläche im praxisrelevanten Umfang vergrößert wird.

In einer Ausgestaltung ist die Bauhöhe des Rührgeräts kleiner als die Bauhöhe der Küchenmaschine. Da das Standteils des Rührgeräts eine vergleichsweise kleine Stellfläche aufweist, ist die geringere Bauhöhe von besonderem Vorteil, weil dadurch ein besonders tief gelegener Schwerpunkt realisiert werden kann. Der tief gelegene Schwerpunkt trägt zur Standsicherheit und damit zu einem störungsfreien Betrieb bei.

Insbesondere weist die Gefäßoberkante im Fall des Rührgeräts einen geringeren Abstand zur Unterseite des Rührgeräts auf im Vergleich zu dem Fall, dass das Gefäß Teil der Küchenmaschine ist. Auch dies trägt zu einem vergleichsweise tiefen Schwerpunkt im Fall des Rührgerätes bei.

Das System umfasst in einer Ausgestaltung ein zweites Gefäß, welches wie das bereits genannte Gefäß beschaffen ist. Wird eine Speise zunächst mithilfe der Küchenmaschine in dem erstgenannten Gefäß zubereitet und wird das Gefäß später beim Rührgerät wie zuvor beschrieben eingesetzt, so kann das zweite Gefäß genutzt werden, um mithilfe der Küchenmaschine beispielsweise parallel eine andere Speise zuzubereiten.

Das Standteil der Küchenmaschine ist vorzugsweise so eingerichtet, dass die Drehrichtung des Rührwerkzeugs gewechselt werden kann. Die Küchenmaschine kann damit verbessert für ein reines Rühren und alternativ für ein Rühren und Zerkleinern von Zutaten einer Speise eingesetzt werden.

Das Standteil des Rührgeräts und/oder das Standteil der Küchenmaschine können eine elektronische Steuerung aufweisen. Der Betrieb der Küchenmaschine bzw. der Betrieb des Rührgerätes können bei Vorhandensein einer Steuerung durch die Steuerung gesteuert werden.

Vorzugsweise sind das Standteil des Rührgeräts und das Standteil der Küchenmaschine so eingerichtet, dass diese miteinander drahtlos Daten austauschen können. Ein Austausch von Daten kann dazu genutzt werden, um einen aufeinander abgestimmten Betrieb des Rührgeräts oder der Küchenmaschine mithilfe einer Steuerung zu steuern. Ein drahtloser Austausch zwischen den Standteilen ist beispielsweise durch Bluetooth^{®} möglich.

Die Küchenmaschine und/oder das Rührgerät können als Einrichtung für die Zubereitung einer Speise eine Heizeinrichtung aufweisen, mit der das Gefäß erwärmt werden kann. Das Standteil der Küchenmaschine und/oder das Standteil des Rührgeräts können eine Steuerung umfassen, mit der das Erwärmen des Gefäßes gesteuert werden kann. Die Heizeinrichtung kann eine elektrische Widerstandsheizung umfassen, um Hitze erzeugen zu können. Die Heizeinrichtung kann einen Temperatursensor umfassen, um Temperaturen erfassen, anzeigen und/oder steuern zu können. Die Steuerung kann so sein, dass das Gefäß auf eine gewählte Temperatur gebracht werden kann und diese Temperatur gehalten werden kann. Das Standteil der Küchenmaschine und/oder das Standteil des Rührgeräts können so eingerichtet sein, dass eine Temperatur stufenlos ausgewählt und eingestellt werden kann.

Das Standteil der Küchenmaschine und/oder das Standteil des Rührgeräts können so eingerichtet sein, dass eine Temperatur nur stufenförmig ausgewählt und eingestellt werden kann. Diese Ausgestaltung ist zu bevorzugen, um die Bedienung einfach zu halten und Bedienfehler zu vermeiden. Beispielsweise kann die Temperatur in Schritten von 5° C eingestellt werden, beispielsweise beginnend mit einer Temperatur von 25 °C oder 30 °C. Vorzugsweise ist die tiefste Temperatur, die bei dem Standteil der Küchenmaschine und dem Standteil des Rührgeräts eingestellt werden kann, gleich. So kann die tiefste Temperatur, die bei beiden Standteilen eingestellt werden kann, beispielsweise 25 °C oder 30 °C betragen. Können bei beiden Standteilen die Temperaturen nur stufenförmig verändert werden, so sind die Stufen bei beiden Standteilen vorzugsweise gleich. Kann also eine Temperatur im Fall der Küchenmaschine in 5° C Schritten verändert werden, so kann dann beim Rührgerät die Temperatur ebenfalls nur in 5° C Schritten geändert werden. Durch diese Übereinstimmung wird erreicht, dass in beiden Geräten in gleicher Weise temperiert werden kann. Dies erleichtert das parallele Zubereiten von Speise gemäß Rezepten.

Vorzugsweise ist die maximale Temperatur, die beim Standteil des Rührgeräts eingestellt werden kann, geringer als die maximale Temperatur, die beim Standteil der Küchenmaschine eingestellt werden kann. Da das Gefäß im Fall des Rührgeräts grundsätzlich weniger geschützt ist, ist es aus Sicherheitsgründen von Vorteil, wenn die maximale Temperatur beim Rührgerät geringer ist als bei der Küchenmaschine.

Vorzugsweise umfasst das Gefäß eine Widerstandsheizung als Teil der Heizeinrichtung. Dies reduziert den technischen Aufwand, wenn eine Heizeinrichtung sowohl bei der Küchenmaschine als auch bei dem Rührgerät vorgesehen werden soll. Vorzugsweise umfasst das Gefäß einen Temperatursensor, um Temperaturen erfassen, anzeigen und/oder steuern zu können.

Als Einrichtung für die Zubereitung einer Speise können bei der Küchenmaschine und/oder bei dem Rührgerät eine Waage vorgesehen sein, mit der das Gewicht einer in das Gefäß hineingebrachten Zutat oder Speise gewogen werden kann. Die Küchenmaschine und/oder das Rührgerät können eine Steuerung umfassen, mit der die Waage und damit das Wiegen gesteuert werden kann. Vorzugsweise umfasst nur die Küchenmaschine eine Waage nebst zugehöriger Steuerung, um den Bauraum für das Rührgerät besonders klein halten zu können.

Als Einrichtung für die Zubereitung einer Speise können bei der Küchenmaschine und/oder bei dem Rührgerät ein optischer Sensor vorgesehen sein, mit dem eine in das Gefäß hineingebrachte Zutat optisch überwacht werden kann. Das Gefäß kann den optischen Sensor aufweise. Die Küchenmaschine und/oder das Rührgerät können eine Steuerung umfassen, mit der der optische Sensor und damit das optische Überwachen gesteuert werden kann. Es kann nur beim Standteil der Küchenmaschine ein optischer Sensor nebst Steuerung vorhanden sein, um den Bauraum für das Rührgerät besonders klein halten zu können.

Ferner ist ein Standteil des Rührgeräts für das System offenbart. Das Standteil kann Teil des Systems sein. Das Standteil des Rührgeräts kann so wie zuvor beschrieben beschaffen sein.

Das Standteil des Rührgeräts kann eine Ausnehmung aufweisen, welche einen unteren Bereich des Gefäßes aufnehmen kann. Form und Durchmesser der Ausnehmung können der Form und dem Durchmesser des unteren Bereichs des Gefäßes entsprechen, um das Gefäß sicher und zuverlässig durch das Standteil in einer gewünschten Position zu halten. Der untere Bereich kann eine Höhe aufweisen, die nicht mehr als 30 %, vorzugsweise nicht mehr als 25%, der Gesamthöhe des Gefäßes beträgt. Ist das Gefäß beispielsweise 20 cm hoch, so kann dann die Höhe des unteren Bereichs auf 20:3 cm oder 20:4 cm beschränkt sein. Der untere Bereich kann auch eine Höhe aufweisen, die nicht mehr als 35 % der Gesamthöhe des Gefäßes beträgt.

Das Standteil des Rührgeräts umfasst einen elektrischen Antrieb, mit dem das im gefäß befindliche Rührwerkzeug angetrieben werden kann. Der elektrische Antrieb kann einen Schrittmotor umfassen. Ein Schrittmotor ist für einen Einsatz im Rührgerät besonders gut geeignet, da das Rührwerkzeug nur mit geringen Drehzahlen gedreht werden soll im Vergleich zu Drehgeschwindigkeiten bei einer Küchenmaschine. Das Rührwerkzeug kann daher unmittelbar mit der Welle des Schrittmotors verbunden werden. Der Bauraum kann daher klein sein, so dass der zusätzliche Platzbedarf für das Standteil des Rührgeräts klein sein kann.

Vorzugsweise ist der elektrische Antrieb des Rührgeräts ein Hybridschrittmotor. Ein Hybridschrittmotor kann nur mit einer relativ geringen Drehzahl gedreht werden. Da das Rührgerät lediglich als Ergänzung dienen soll, um Rühraufgaben zu übernehmen, sind nur geringe Drehzahlen aus Sicherheitsgründen sogar von Vorteil.

Ein Hybridschrittmotor hat sich auch deshalb als geeignet herausgestellt, weil sein Drehmoment im Verhältnis zu seinem Gewicht gering ist, was aus Sicherheitsgründen ebenfalls von Vorteil ist. Von Vorteil ist weiter, dass das Drehmoment nicht oder zumindest kaum im relevanten Drehzahlbereich von der Drehzahl abhängt. So ändert sich das Drehmoment eines handelsüblichen Hybridschrittmotors nicht oder zumindest nicht in einer praxisrelevanten Weise im Drehzahlbereich von 50 bis 500 Umdrehungen. Drehzahlen von 50 bis 500 Umdrehungen genügen für den vorliegenden Anwendungsfall. Das Drehmoment kann dann beispielsweise wenigstens 0,2 N*m oder 0,3 N*m und/oder nicht mehr als 0,4 N*m betragen. Das Drehmoment kann zum Beispiel 0,35 N*m betragen.

Ein Hybridschrittmotor ist vergleichsweise schwer und zwar insbesondere im Vergleich zu einem Piezoschrittmotor. Weil der elektrische Antrieb im Standteil des Rührgeräts untergebracht ist, trägt der Hybridschrittmotor zu einem relativ hohen Gewicht des Standteils bei. Ein relativ hohes Gewicht des Standteils des Rührgeräts ist von Vorteil, um für Standsicherheit während des Betriebs zu sorgen. Dennoch kann das Standteil des Rührgeräts im Vergleich zum Standteil der Küchenmaschine klein sein. Dadurch können übermäßig große Platzprobleme in einem Haushalt vermieden werden.

Der elektrische Antrieb befindet sich grundsätzlich unterhalb des Gefäßes, wenn das Gefäß in das Standteil des Rührgeräts eingesetzt und das Standteil bestimmungsgemäß aufgestellt ist.

Der elektrische Antrieb kann eine Mehrzahl von Permanentmagneten umfassen. Vorzugsweise umfasst der elektrische Antrieb jedoch einen Rotor mit nur einem Permanentmagneten. Der Montageaufwand kann so besonders geringgehalten werden.

Vorzugsweise umfasst der elektrische Antrieb einen Stator mit einer Ringform und einen Rotor innerhalb der Ringform. Diese Bauform eignet sich besonders gut, um eine Welle des elektrischen Antriebs mit dem Rührwerkzeug verbinden zu können.

Vorzugsweise stehen von der Ringform Segmente mit Zähnen nach innen ab. Um jedes Segment ist eine Spule gewickelt. Der Rotor umfasst nach außen abstehende, magnetisch gepolte Zähne.

Vorzugsweise können Zähne des Stators Zähnen des Rotors genau gegenüberliegen. Gleichzeitigt können andere Zähne des Stators gegenüber anderen Zähnen des Rotors versetzt angeordnet sein.

Vorzugsweise umfasst der Rotor erste Zähne und zweite Zähne. Die ersten Zähne sind ein magnetischer Nordpol oder werden von einem ersten magnetischen Fluss eines Magneten durchsetzt. Die zweiten Zähne sind ein magnetischer Südpol oder werden von einem zweiten magnetischen Fluss eines Magneten durchsetzt und zwar in umgekehrter Richtung im Vergleich zum ersten magnetischen Fluss. Ein erster Zahn kann also durch den Nordpol eines Permanentmagneten gebildet sein. Ein zweiter Zahn kann durch den Südpol eines Permanentmagneten gebildet sein. Es kann aber auch ein Magnet so an die ersten und zweiten Zähne angrenzen, dass der durch den Magneten erzeugte magnetische Fluss die ersten und die zweiten Zähne durchsetzt. Der magnetische Fluss durch die ersten Zähne verläuft dann umgekehrt zum magnetischen Fluss durch die zweiten Zähne. Die ersten Zähne wirken dann beispielsweise wie ein magnetischer Nordpol. Die zweiten Zähne wirken dann wie ein magnetischer Südpol. Die ersten und die zweiten Zähne sind dann im Sinn der vorliegenden Erfindung magnetisch gepolt.

Erste und zweite Zähne bilden grundsätzlich den Außenumfang des Rotors. Ein erster Zahn befindet sich grundsätzlich zwischen zwei zweiten Zähnen und umgekehrt.

Der Rotor umfasst vorzugsweise einen ersten Rotationskörper aus ferromagnetischem Material, der mit den ersten Zähnen versehen ist. Der Rotor umfasst vorzugsweise einen zweiten Rotationskörper aus ferromagnetischem Material, der mit den zweiten Zähnen versehen. Der Nordpol eines Permanentmagneten reicht vorzugsweise in den ersten Rotationskörper hinein. Der Südpol des Permanentmagneten reicht vorzugsweise in den zweiten Rotationskörper hinein.

Die Zähne des Rotors sind an ihrer Oberseite vorzugsweise nach außen gewölbt. Die Zähne des Stators sind an ihrer Oberseite vorzugsweise nach innen gewölbt.

Das Rührwerkzeug umfasst vorzugsweise eine stumpfe Kante und eine gegenüberliegende scharfe Kante. Das Rührgerät ist so eingerichtet, dass das Rührwerkzeug nur in Richtung der stumpfen Kante gedreht werden kann. Indem das Rührgerät so eingerichtet ist, dass das Rührwerkzeug nur in Richtung der stumpfen Kante gedreht werden kann, wird ein unerwünschtes Zerkleinern einer Speise bzw. von Zutaten einer Speise vermieden. Außerdem trägt auch dies zur Sicherheit beim Rührgerät bei. Das Rührwerkzeug weist eine gegenüberliegende scharfe Kante auf, damit das Gefäß mit dem Rührwerkzeug auch in einer Küchenmaschine eingesetzt werden kann. Mithilfe der Küchenmaschine, die das Rührwerkzeug in umgekehrter Richtung drehen kann, können dann Zutaten einer Speise zerkleinert werden.

Der elektrische Antrieb kann durch eine lösbare Kupplung mit dem Rührwerkzeug verbunden werden. Ein Kupplungselement der lösbaren Kupplung kann an der Welle des Antriebs angebracht sein. Ein Kupplungselement der lösbaren Kupplung kann an der Welle des Rührwerkzeugs angebracht sein. Die lösbare Kupplung befindet sich unterhalb des Gefäßbodens, wenn das Gefäß in die Ausnehmung des Standteils eingesetzt ist. Bei dieser Ausgestaltung kann das Gefäß leicht vom Standteil gelöst werden. Bei einer solchen Ausgestaltung kann das Gefäß besonders einfach sowohl mit dem Standteil betrieben werden als auch mit einer entsprechend eingerichteten Küchenmaschine. Unterhalb des Bodens des Gefäßes befindet sich dann das Kupplungselement, das an der Welle des Rührwerkzeugs angebracht ist.

Vorzugsweise unterscheidet sich das Kupplungselement des Standteils des Rührgeräts von dem Kupplungselement des Standteils der Küchenmaschine. Beide Kupplungselemente sind aber so, dass diese mit dem Kupplungselement des Gefäßes so verbunden werden können, dass eine Drehbewegung von dem Kupplungselement des jeweiligen Standteils auf das Mischwerkzeug übertragen werden kann. Das Kupplungselement beim Standteil des Rührgeräts unterscheidet sich vom Kupplungselement beim Standteil der Küchenmaschine, damit das Kupplungselement beim Standteil des Rührgeräts auch anders eingesetzt werden kann. Unterschiede sind vorhanden, damit nur das Kupplungselement der Küchenmaschine so eingerichtet sein kann, dass dieses sehr hohe Drehmomente übertragen kann. Das Kupplungselement beim Standteil der Küchenmaschine ist also für die Übertragung hoher Drehmomente optimiert. Das Kupplungselement des Standteils des Rührgeräts ist für variable Einsatzmöglichkeiten optimiert.

Vorzugsweise kann die lösbare Kupplung durch eine Linearbewegung parallel zur Motorwelle gelöst werden. Das Gefäß kann dann vorteilhaft vom Standteil des Rührgeräts gelöst werden, indem das Gefäß angehoben, also nach oben von dem Standteil des Rührgeräts wegbewegt wird.

Vorzugsweise beträgt das Gewicht des Standteils wenigstens 1,5 kg, vorzugsweise wenigstens 2 kg, damit dieses hinreichend standsicher sein kann. Das Gewicht des Standteils beträgt vorzugsweise nicht mehr als 3 kg, damit das Gewicht nicht unnötig hoch ist. Idealerweise liegt das Gewicht des Standteils zwischen 2 kg und 2,5 kg. Die Küchenmaschine kann ein Standteil mit einem wesentlich höheren Gewicht aufweisen. Das Gewicht des Standteils der Küchenmaschine kann wenigstens doppelt so hoch oder sogar wenigstens dreimal so hoch wie das Standteil des Rührgeräts sein, damit die Küchenmaschine auch bei sehr hoher Drehgeschwindigkeit standsicher ist. Das Gewicht des Standteils der Küchenmaschine kann mehr als 3 kg, vorzugsweise mehr als 4 kg, betragen. Das Gewicht des Standteils der Küchenmaschine beträgt vorzugsweise nicht mehr als 10 kg, besonders bevorzugt nicht mehr als 8 kg, um unnötig hohe Gewichte zu vermeiden.

Das Standteil des Rührgeräts kann elektrische Kontakte für ein Erhitzen des Gefäßes aufweisen, die mit elektrischen Kontakten an der Unterseite des Gefäßes verbunden sind, wenn das Gefäß in die Ausnehmung eingesetzt ist. Das Standteil des Rührgeräts kann eine Steuerung umfassen, mit der eine Temperatur für ein Erhitzen des Gefäßes eingestellt werden kann. Vorzugsweise ist die Temperatur, die eingestellt werden kann, aus Sicherheitsgründen auf 150°C, besonders bevorzugt auf 125°C begrenzt. Vorzugsweise ist die Temperatur, die durch das Standteil des Rührgeräts eingestellt werden kann, geringer als die Temperatur, die im Fall der Küchenmaschine eingestellt werden kann. Auch dieser Ausgestaltung liegt der Gedanke zugrunde, dass nur für wenige Fälle der Speisenzubereitung eine besonders hohe Temperatur benötigt wird, so dass mit dem Rührgerät keine sehr hohen Temperaturen erreicht werden müssen. So kann die Maximaltemperatur im Fall des Rührgeräts auf 125 °C begrenzt sein und die Maximaltemperatur im Fall der Küchenmaschine auf 160 °C.

Das Standteil des Rührgeräts kann für das Einstellen einer Temperatur einen Taster umfassen, der drehbar ist. Vorzugsweise umfasst dann auch das Standteil der Küchenmaschine für das Einstellen der Temperatur einen Taster, der drehbar ist. Es werden so Umstellungsschwierigkeiten vermieden, wenn das Gefäß von der Küchenmaschine entfernt wird und in das Standteil des Rührgeräts eingesetzt wird oder umgekehrt.

Das Standteil des Rührgeräts kann für das Einstellen einer Drehgeschwindigkeit einen Taster umfassen, der drehbar ist. Vorzugsweise umfasst dann auch das Standteil der Küchenmaschine für das Einstellen der Drehgeschwindigkeit einen Taster, der drehbar ist. Es werden so Umstellungsschwierigkeiten vermieden, wenn das Gefäß von der Küchenmaschine entfernt wird und in das Standteil des Rührgeräts eingesetzt wird oder umgekehrt.

Das Standteil des Rührgeräts kann für das Anzeigen von Betriebszuständen ein Display umfassen. Vorzugsweise umfasst dann auch das Standteil der Küchenmaschine Anzeigen von Betriebszuständen ein Display. Es werden so Umstellungsschwierigkeiten vermieden, wenn das Gefäß von der Küchenmaschine entfernt wird und in das Standteil des Rührgeräts eingesetzt wird oder umgekehrt.

Umfassen das Standteil der Küchenmaschine und das Standteil des Rührgeräts sowohl einen drehbaren Taster für ein Einstellen einer Temperatur und/oder für ein Einstellen einer Drehgeschwindigkeit als auch ein Display, dann ist die Lage des drehbaren Tasters relativ zur Lage des Displays vorzugsweise bei beiden Standteilen gleich. Umstellungsschwierigkeiten können so vermieden werden. So kann beispielsweise der drehbare Taster bei beiden Standteilen rechts neben dem Display sowie angrenzend an das Display angeordnet sein.

Ist das Standteil des Rührgeräts so eingerichtet, dass dieses das Gefäß erhitzen kann, so kann das Rührgerät mithilfe von Zubehör auch für andere Zwecke eingesetzt werden wie zum Beispiel für ein Kochen oder Garen von Speisen oder Zutaten von Speisen. So kann ein Aufsatzbehälter vorhanden sein, der auf das Gefäß aufgesetzt werden kann, um mit dem Rührgerät Dampfgaren zu können. Es kann ein Gareinsatz vorgesehen sein, der in das Gefäß eingehängt werden kann, um beispielsweise Kochen zu können.

Das Standteil des Rührgeräts und das Standteil der Küchenmaschine weisen vorzugsweise eine gleich wirkende oder zumindest im Wesentlichen gleich wirkende Steuerung für das Erhitzen des Gefäßes auf. Damit ist gemeint, dass eine Speise in dem Gefäß gleich schnell erhitzt werden kann und zwar unabhängig davon, ob das Gefäß in das Standteil des Rührgeräts eingesetzt wird oder in das Standteil der Küchenmaschine. Beispielsweise befindet sich in dem Gefäß ein Liter Flüssigkeit, das Gefäß ist in eines der genannten Standteile eingesetzt und das entsprechende Standteil ist beispielsweise so eingestellt worden, dass die Flüssigkeit auf maximal 90° C erhitzt wird. Die Temperatur von 90° C wird dann nach dem Einstellen beispielsweise 300 Sekunden +/- 10%, also +/- 30 Sekinden später in dem Gefäß erreicht und zwar unabhängig davon, ob das Gefäß in das Standteil des Rührgeräts eingesetzt worden ist oder in das Standteil der Küchenmaschine. Auch sind die Aufheizkurven dann gleich oder zumindest im Wesentlichen gleich. Wird also die Temperatur von 50° C nach Ablauf von 150 Sekunden +/- 10% erreicht, dann gilt dies für beide genannten Standteile. Vorzugsweise unterscheiden sich die Heizkurven um nicht mehr als +/- 10%, weiter bevorzugt um nicht mehr +/- 5%, besonders bevorzugt um nicht mehr als +/- 3%.

Es zeigen
- Figur 1:: Rührgerät mit Standteil und einsetzbarem Gefäß;
- Figur 2:: Rührwerkzeug;
- Figur 3:: axialer Schnitt durch einen Hybridschrittmotor;
- Figur 4:: transversaler Schnitt durch einen Hybridschrittmotor;
- Figur 5:: Gefäß für das Rührgerät sowie für die Küchenmaschine;
- Figur 6:: Aufsicht auf Rührgerät mit Gefäß aus Figur 5;
- Figur 7:: Seitenansicht auf Rührgerät aus Figur 6;
- Figur 8:: Küchenmaschine;
- Figur 9:: Aufsicht auf Ausnehmung für das Gefäß aus Figur 5.

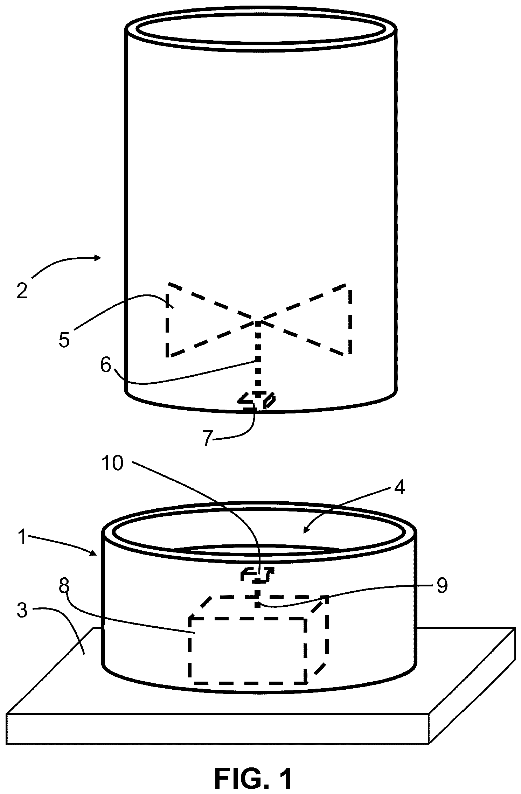

Die Figur 1 zeigt ein Rührgerät mit einem Standteil 1 und einem Gefäß 2. Das Standteil 1 ist auf einem Untergrund 3 aufgestellt. Das Standteil 1 weist eine Ausnehmung 4 auf, welche einen unteren Bereich des Gefäßes 2 aufnehmen kann. Das Gefäß 2 kann also in die Ausnehmung 4 eingesetzt werden. Form und Durchmesser der Ausnehmung 4 sind an die Form und den Durchmesser des unteren Bereichs des Gefäßes 2 angepasst, um das Gefäß 2 sicher und zuverlässig durch das Standteil 1 halten zu können. Die Ausnehmung kann kreisförmig sein, wie dies in der Figur 1 gezeigt wird. Der untere Bereich des Gefäßes 2 ist daher ebenfalls kreisrund, damit die beiden Formen aneinander angepasst sind. Der Außendurchmesser des unteren Bereichs des Gefäßes 2 ist geringfügig kleiner als der Innendurchmesser der Ausnehmung 4, damit das Gefäß 2 sicher durch das Standteil gehalten werden kann. Es können aber auch andere Formen vorgesehen sein. Vorzugsweise kann das Gefäß 2 drehfest in die Ausnehmung 4 eingesetzt werden. So können die Ausnehmung 4 und der untere Bereich des Gefäßes 2 dreieckig, viereckig, fünfeckig oder oval sein, damit das Gefäß 2 drehfest in das Standteil eingesetzt sein kann.

Ein durch gestrichelte Linien angedeutetes Rührwerkzeug 5 befindet sich im Gefäß 2 und zwar in der Nähe des Bodens des Gefäßes 2 und damit beim Grund des Gefäßes 2. Das Rührwerkzeug 5 kann durch eine Welle 6 gedreht werden. Die Welle 6 führt durch den Boden des Gefäßes 2 hindurch. Das nach unten weisende Ende der Welle 6 umfasst ein Kupplungsstück 7.

Das Standteil 1 umfasst einen durch gestrichelte Linien angedeuteten Elektromotor 8 mit einer Welle 9. Das nach oben weisende Ende der Welle 9 umfasst ein Kupplungsstück 10. Der Elektromotor 8 ist ein Hybridschrittmotor.

Wird das Gefäß 2 in die Ausnehmung 4 eingesetzt, so werden dadurch die beiden Kupplungsstücke 7 und 10 miteinander verbunden. Wird die Welle 9 des Motors 8 gedreht, so überträgt sich dann die Drehbewegung von der Welle 9 auf die Welle 6. Es wird folglich das Rührwerkzeug 5 gedreht. Ein Getriebe ist nicht erforderlich, weil durch einen Hybridschrittmotor geeignete Drehzahlen auch ohne ein Getriebe eingestellt werden können.

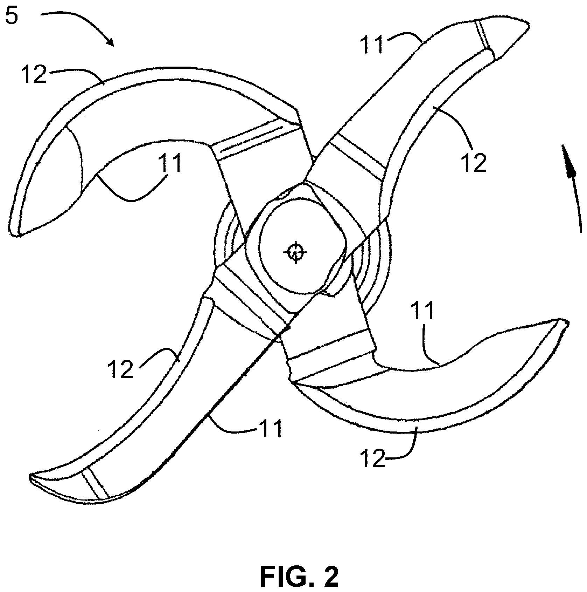

In der Figur 2 wird ein Beispiel für ein Rührwerkzeug 5 gezeigt, welches eine stumpfe Kante 11 und eine gegenüberliegende scharfe Kante 12 aufweist. Wird das Rührwerkzeug 11 wie durch einen Pfeil angedeutet entgegengesetzt zum Uhrzeigersinn gedreht, so wird das Rührwerkzeug 11 in Richtung der stumpfen Kante 11 gedreht. Ein erfindungsgemäßes Rührgerät ist grundsätzlich so eingerichtet, dass das Rührwerkzeug 11 nur in Richtung der stumpfen Kante 11 gedreht werden kann.

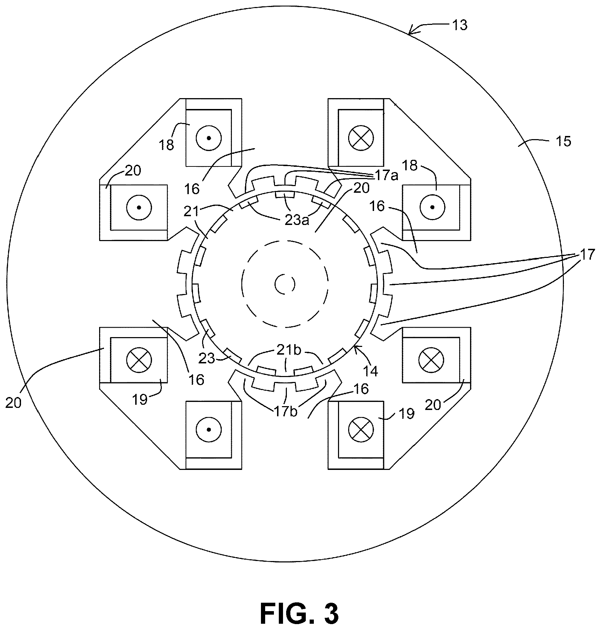

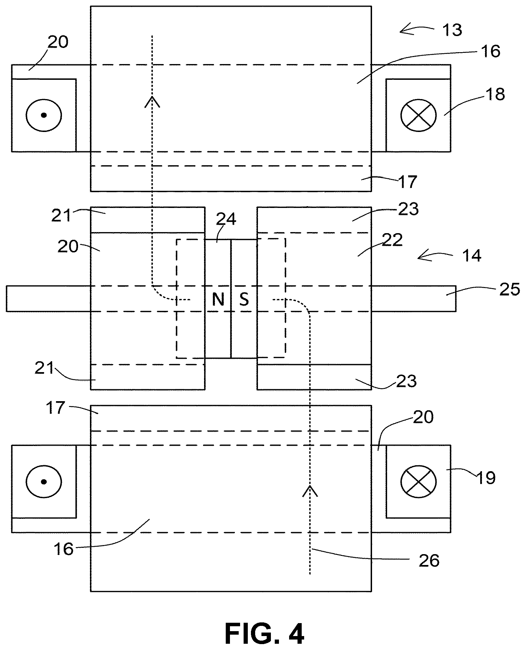

Die Figur 3 zeigt einen axialen Schnitt durch einen Hybridschrittmotor. Die Figur 4 zeigt einen transversalen Schnitt durch den Hybridschrittmotor aus Figur 3. Der Hybridschrittmotor umfasst einen Stator 13 und einen Rotor 14. Der Grundkörper 15 des Stators 13 besteht vorzugsweise vollständig aus Metall, damit der Hybridschrittmotor ein hohes Gewicht aufweist. Der Grundkörper 15 des Stators 13 kann aus einer Mehrzahl von Blechen bestehen, die zu einem Paket zusammengefasst sind. Die Bleche können durch Nieten miteinander verbunden sein.

Der Grundkörper 15 umfasst eine Mehrzahl von Segmenten 16. Die Segmente 16 stehen von einer Ringform des Grundkörpers 15 nach innen ab. Die Außenkontur der Ringform kann wie in der Figur 3 gezeigt kreisrund sein. Die Außenkontur der Ringform kann aber auch beispielsweise eckig sein. Es können wie in der Figur 3 gezeigt vier Segmente 16 vorhanden sein. Es können aber auch zum Beispiel sechs oder acht Segmente 16 sein. Ein jedes Segment 16 weist an seinem nach innen weisenden Ende eine Mehrzahl von Zähnen 17 auf. Ein jedes Segment 16 kann wie in der Figur 3 gezeigt jeweils drei Zähne 17 aufweisen. Es können aber auch mehr oder weniger als drei Zähne 17 pro Segment 16 vorhanden sein, also zum Beispiel zwei, vier oder fünf Zähne 17. Die Segmente mit den Zähnen bestehen aus einem magnetisierbaren Material. Es kann sich um ein ferromagnetisches Material handeln, welches beispielsweise überwiegend Eisen umfasst. Es kann sich aber auch um ein paramagnetisches Material handeln.

Um ein jedes Segment 16 herum ist jeweils eine Spule 18, 19 gewickelt. Damit die Wicklungen der Spulen 18, 19 gegenüber dem Grundkörper 15 im Bedarfsfall elektrisch isoliert sind, können elektrische Isolationskörper 20 vorhanden sein, die die Wicklungen der Spulen 18, 19 elektrisch von dem Grundkörper 15 trennen. Während des Betriebs fließt zu gegebener Zeit ein Strom durch eine Spule 18 entgegengesetzt zu einem Strom durch eine Spule 19, um den Rotor zu drehen. Die Richtung eines möglichen Stromflusses ist in der Figur 3 durch eine "•"- und "X" - Darstellung für eine jede Spule 18, 19 angedeutet.

Der Rotor 14 befindet sich innerhalb der Ringform des Stators 13. Der Rotor 14 umfasst einen ersten Rotationskörper 20, der mit ersten Zähnen 21 versehen ist, und einen zweiten Rotationskörper 22 (siehe Figur 4), der mit zweiten Zähnen 23 versehen ist. Die Rotationskörper 20, 22 können aus paramagnetischem Material bestehen. Ein ferromagnetisches Material ist aber für die Rotationskörper 20, 22 zu bevorzugen. Ein oder beide Rotationskörper 20, 22 können jeweils aus einer Mehrzahl von Blechen bestehen. Die Bleche eines Rotationskörpers können beispielsweise durch Nuten oder Schrauben miteinander verbunden sein. Ein oder beide Rotationskörper 20, 22 können alternativ jeweils einstückig gefertigt sein. Ein erster Zahn 21 ist zwischen zwei zweiten Zähnen 23 angeordnet und umgekehrt, wie dies in der Figur 3 zu sehen ist. Die Zähne 21, 23 des Rotors 14 grenzen an die Zähne 17 des Stators 13 so an, dass dazwischen ein schmaler Spalt verbleibt.

Die Zähne 21, 23 des Rotors 14 sind auf ihrer Oberseite vorzugsweise so nach außen gewölbt, dass die Oberseiten der Zähne 21, 23 in Aufsicht gesehen eine Ringform bilden, wie dies in der Figur 3 gezeigt wird. Die Oberseiten der Zähne 17 des Stators sind dann vorzugsweise dazu korrespondierend nach innen gewölbt. Dadurch kann ein besonders schmaler Spalt zwischen den Zähnen 17 des Stators 13 einerseits und den Zähnen 21, 23 des Rotors 14 andererseits eingestellt werden.

Die Figur 4 verdeutlicht, dass in den ersten Rotationskörper 20 der Nordpol N eines Permanentmagnets 24 hineinreicht und in den zweiten Rotationskörper 22 der Südpol S des Permanentmagneten 24 hineinreicht. Die ersten Zähne 21 wirken daher als magnetischer Nordpol und die zweiten Zähne 23 als magnetischer Südpol. In Aufsicht gesehen kann, wie in Figur 3 gezeigt, ein erster Zahn 21 unmittelbar an einen zweiten Zahn 23 angrenzen und an den zweiten Zahn 23 dann wieder unmittelbar ein nächster erster Zahn 21, so dass es in Aufsicht gesehen keine Zwischenräume zwischen ersten und zweiten Zähnen 21, 23 gibt.

Die Figur 3 verdeutlicht, dass zweite Zähne 23a durch die Zähne 17a der oberen Spule 18 durch Reluktanzkraft in die gezeigte fluchtende Stellung bewegt worden sind. Die Zähne 17a liegen dann den Zähnen 23a genau gegenüber. Außerdem sind erste Zähne 21a durch die Zähne 17b der unteren Spule 19 durch Reluktanzkraft in die dargestellte fluchtende Stellung bewegt worden. Die Zähne 17b liegen dann den Zähnen 21b genau gegenüber. Um dies zu erreichen, fließt der Strom durch die untere Spule 19 in umgekehrter Richtung im Vergleich zum Strom, der durch die obere Spule 18 fließt. Durch die seitlichen Spulen 18 und 19 fließt in dieser Zeit kein Strom.

Hat der Rotor 14 die in der Figur 3 gezeigte Stellung erreicht, dann wird der Stromfluss durch die obere Spule 18 und die untere Spule 19 unterbrochen und ein Strom fließt dann durch die seitlichen Spulen 18, 19 und zwar wiederum in entsprechend entgegengesetzter Richtung. Da die seitlich angeordneten Zähne 17 des Stators 13 gegenüber den seitlich liegenden Zähnen 21 und 23 des Rotors 14 versetzt angeordnet sind, wirkt eine Reluktanzkraft so auf den Rotor 14 ein, dass dieser entgegengesetzt zum Uhrzeigersinn weitergedreht wird.

Die Figur 4 zeigt, dass die Welle 25 des Hybridschrittmotors durch den Permanentmagneten 24 und die beiden Rotationskörper 20, 22 hindurchführen kann. Die Figur 4 zeigt exemplarisch einen Pfad 26 eines magnetischen Flusses, der während des Betriebs des Hybridschrittmotors auftreten kann. Der exemplarisch gezeigte Pfad verdeutlicht, dass der magnetische Fluss die ersten Zähne 21 und die zweiten Zähne 23 durchsetzt. Der magnetische Fluss verläuft durch die ersten Zähne 21 hindurch in Richtung Außenseite der ersten Zähne 21. Der magnetische Fluss verläuft durch die zweiten Zähne 23 hindurch in einer dazu umgekehrten Richtung, also von der Außenseite der zweiten Zähne 23 in Richtung der Innenseite der zweiten Zähne 23.

Es gibt eine nicht dargestellte Steuerung für den Hybridschrittmotor, der den Stromfluss wie zuvor beschrieben steuert.

Gemäß Figur 4 ist nur ein Permanentmagnet 24 vorhanden. Es können aber auch zwei und mehr Permanentmagnete vorhanden sein, die in die Rotationskörper 20, 22 hineinreichen.

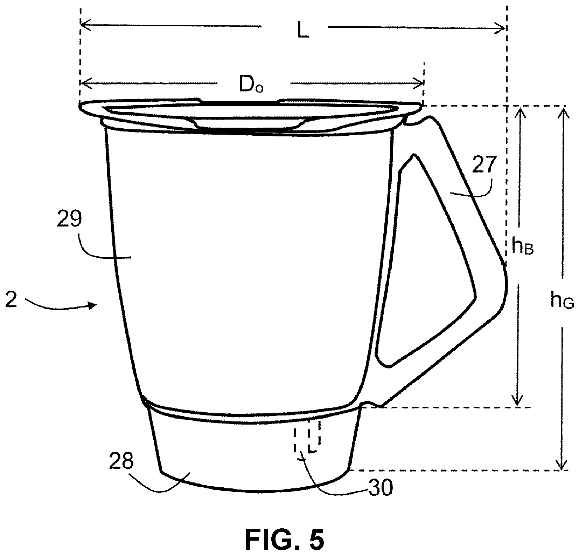

In der Figur 5 wird eine bevorzugte Ausführungsform eines Gefäßes 2 gezeigt. Das Gefäß 2 verfügt über einen aus Kunststoff bestehenden Griff 27 und eine untere Kappe 28, die nach unten offen ist. Die untere Kappe 28 ist durch einen Drehverschluss dem aus Metall bestehenden Behälter 29 verbunden. Durch Drehen kann die Kappe 28 von dem Behälter 29 gelöst werden. Wird die Kappe 28 durch Drehen von dem Behälter 29 gelöst, so wird dadurch das im Behälter 29 befindliche Mischwerkzeug ebenfalls gelöst und kann aus dem Behälter 29 herausgenommen werden. Die Kappe 28 verdeckt elektrische Kontakte 30. Die elektrischen Kontakte 30 gehören zu einer Heizeinrichtung die am Boden des Behälters 29 vorhanden ist. Die Gesamthöhe h_{G} des Gefäßes 2 kann 20 cm betragen. Die Höhe des Behälters 29 kann 16 cm betragen. Am Grund des Behälters 29 befindet sich das Rührwerkzeug. Die Höhe von 16 cm genügt, um zu verhindern, dass Zutaten nach oben aus dem Gefäß 2 bzw. dem Behälter 29 herausgeschleudert werden können, wenn das Rührwerkzeug mit nicht mehr als 300 Umdrehungen pro Minute gedreht wird. Mit dieser Drehgeschwindigkeit kann daher gerührt werden, ohne dass ein Deckel den Behälter 29 dann verschließen müsste.

Der Querschnitt des Behälters 29 ist im Wesentlichen kreisrund. Der Durchmesser nimmt von unten nach oben zu. Am oberen Rand beträgt der Durchmesser Dₒ 20 cm. Von oben gesehen weist das Gefäß 2 aufgrund des Griffes 27 eine Länge L von 27 cm auf. Die maximale Breite beträgt von oben gesehen aufgrund des Durchmessers Dₒ 20 cm. Daher ist die Stellfläche für das zugehörige Rührgerät nicht länger als 27 cm und nicht breiter als 20 cm.

Der in der Figur 5 gezeigte Behälter kann sowohl Teil eines erfindungsgemäßen Rührgeräts sein als auch Teil einer erfindungsgemäßen Küchenmaschine. Die Stellfläche des Rührgeräts ist dann maximal 27 cm lang und maximal 20 cm breit. Die Stellfläche der Küchenmaschine ist deutlich größer und kann beispielsweise bis zu 30 cm lang und bis zu 30 cm breit sein.

Ist das Gefäß 2 Teil der Küchenmaschine, so kann die Höhe 30 cm bis zum oberen Rand des Behälters 29 betragen. Ist das Gefäß 2 Teil des Rührgeräts, so ist die Höhe bis zum oberen Rand des Behälters 29 geringer und kann beispielsweise 27 cm betragen. Hierdurch kann erreicht werden, dass der Schwerpunkt beim Rührgerät tiefer gelegen ist im Vergleich zum Schwerpunkt bei der Küchenmaschine, damit auch das Rührgerät standfest betrieben werden kann.

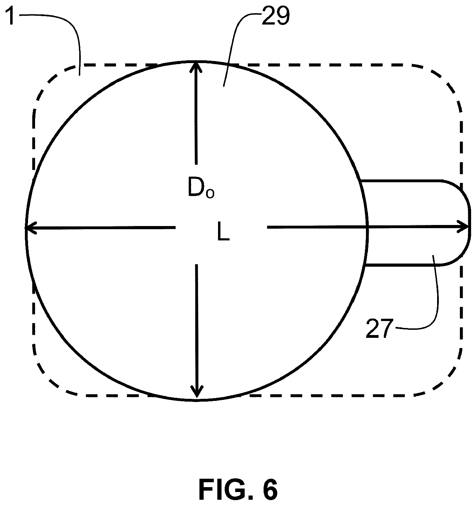

Die Figur 6 zeigt eine Aufsicht auf ein Rührgerät mit einem durch eine gestrichelte Linie dargestelltem Standteil 1 und einem in das Standteil 1 eingesetztem Gefäß, welches den in der Figur 5 gezeigten Behälter 29 und den Griff 27 umfasst. Die Figur 6 verdeutlicht, dass Länge und Breite der Stellfläche des Standteils 1geringfügig kleiner sind als die Länge L und der Durchmesser Dₒ. Damit wird für ein Aufstellen des Rührgeräts nur unwesentlich mehr Platz in einer Küche verbraucht im Vergleich zur Unterbringung des in der Figur 5 gezeigten Gefäßes. Da für ein Kochen ohnehin regelmäßig eine Mehrzahl von Gefäßen benötigt werden, werden durch diese Bauweise in einer Küche keine großen zusätzlichen Platzprobleme verursacht.

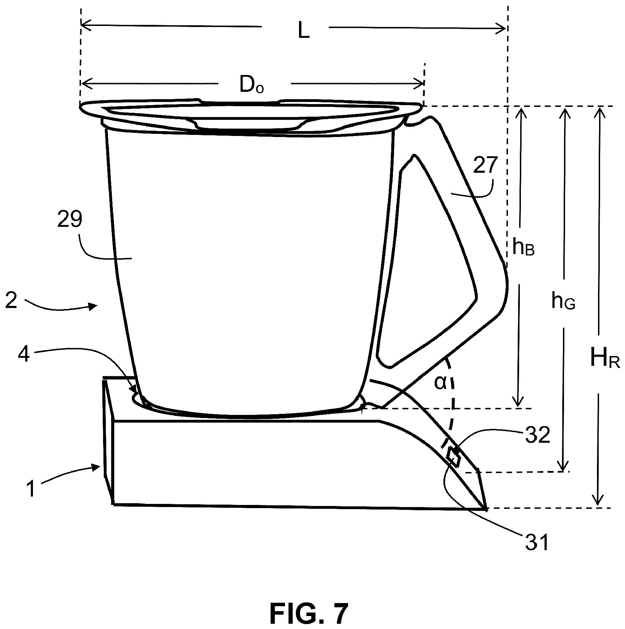

Die Figur 7 zeigt eine Seitenansicht auf das Rührgerät aus Figur 5. Der Griff 21 des Gefäßes 2 reicht an seiner Unterseite ein Stück in eine Aussparung des Gehäuses des Standteils 1 hinein. Dies unterstützt die richtige Ausrichtung des in das Standteil 1 eingesetzten Gefäßes 2 und trägt zu einer drehfesten Verbindung zwischen dem Standteil 1 und dem Gefäß 2 bei. Die elektrischen Kontakte 30 (siehe Figur 5) an der Unterseite des Behälters 9 sind dann in elektrische Buchsen des Standteils 1 eingesteckt. Auch dadurch wird erreicht, dass das Gefäß 2 drehfest in das Standteil 1 eingesetzt ist. Die zugehörige Heizeinrichtung können dann durch das Standteil 1 mit Strom versorgt werden, um den Behälter 29 auch während des Rührens erhitzen zu können.

Das Bedienfeld des Standteils 1 umfasst ein Display 31 und einen Taster 32, der außerdem gedreht werden kann. Durch Drücken des Tasters 32 kann ein Betriebszustand geändert werden, der dann auf dem Display 31 angezeigt werden kann. Durch Drehen des Tasters 32 können Drehzahl für das Rührwerkzeug oder die Temperatur für ein Erhitzen des Behälters 29 eingestellt werden. Die Bedienung und die Anordnung von Bedienelementen entsprechen der Bedienung und der Anordnung von Bedienelementen bei der Küchenmaschine, was die Bedienung von beiden Geräten erleichtert. Auch die Küchenmaschine verfügt dann also über ein Display und einen drehbaren Taster, um darüber zumindest Drehzahlen des Rührwerkzeugs und Temperatur einstellen zu können.

Das Bedienfeld mit dem Display 31 und dem drehbaren Taster 32 befindet sich auf einem rampenförmigen Bereich des Standteils 1, wodurch eine einfache Bedienung möglich ist. Die Unterseite des Griffs 27 schließt mit dem rampenförmigen Bereich einen Winkel α von mehr als 60° ein. Dadurch bleibt das Bedienfeld gut erreichbar. Außerdem kann der Griff 27 von der Bedienfeldseite aus ergriffen werden, was ebenfalls die Handhabung erleichtert. Griff 27 und Bedienfeld befinden sich also aus Handhabungsgründen auf der gleichen Seite, wenn das Gefäß 2 in das Standteil 1 eingesetzt ist.

Die Höhe H_{R} des Rührgeräts bis zur Gefäßoberkante des Behälters 29 ist geringer als die Höhe bei der Küchenmaschine bis zur Gefäßoberkante des Behälters 29. Dadurch wird beim Rührgerät ein günstiger Schwerpunkt erreicht, was zu einem störungsfreien Betrieb beiträgt.

Für das Gefäß 2 gibt es vorzugsweise verschiedene Zubehörteile wie einen Gareinsatz, einen Aufsatzbehälter wie ein Varoma^{®} Behälter, einen Einlegeboden für den Aufsatzbehälter, einen Rühraufsatz, um viele verschiedene Speise zubereiten zu können. Der Gareinsatz ist ein Behälter mit siebförmigen Wänden, der in das Gefäß 2 eingehängt werden kann, so dass zwischen dem Boden des Gareinsatzes und dem Rührwerkzeug ein Abstand verbleibt. Im Anschluss daran kann das Gefäß 2 in einer Ausführungsform mit einem Deckel verschlossen werden. Ein Aufsatzbehälter ist ein Behälter, der auf das Gefäß 2 aufgesetzt werden kann. Der Aufsatzbehälter kann beispielsweise auf einen Deckel des Gefäßes 2 aufgesetzt sein. Dann umfasst der Deckel eine Öffnung, über den Dampf aus dem Gefäß 2 in den Aufsatzbehälter strömen kann. Über eine Gitterstruktur des Bodens des Aufsatzbehälters kann heißer Dampf in den Aufsatzbehälter gelangen, um zu garen. Der Aufsatzbehälter kann länger und/oder breiter als der maximale Durchmesser des Gefäßes 2 sein. Der Aufsatzbehälter kann einen Deckel umfassen. Ein Einlegeboden für den Aufsatzbehälter ist ein Boden, der in das Aufsatzgefäß so eingelegt werden kann, dass der Aufsatzbehälter dann in zwei verschiedene Etagen unterteilt wird. Der Einlegeboden kann eine Siebstruktur aufweisen, um für Dampf durchlässig zu sein. Ein Rühraufsatz ist ein Aufsatz für das Rührwerkzeug. Der Rühraufsatz kann also auf das Rührwerkzeug aufgesetzt werden. Ist der Rühraufsatz auf das Rührwerkzeug aufgesetzt, dann können Rührwerkzeug und Rühraufsatz gemeinsam gedreht werden, um beispielsweise Sahne schlagen zu können.

Die Figur 7 zeigt, dass das Gefäß 2 frei von dem Standteil 1 absteht. Damit ist gemeint, dass nur ein unterer Bereich des Gefäßes 2 - wie in der Figur 7 zu sehen ist - in die Ausnehmung 4 hinein reicht. Ansonsten wird das Gefäß 2 nicht zusätzlich gehalten. Auch dies trägt zu einem kleinen Bauraum bei. Das freie Stehen ist aufgrund der geringen Drehzahlen möglich.

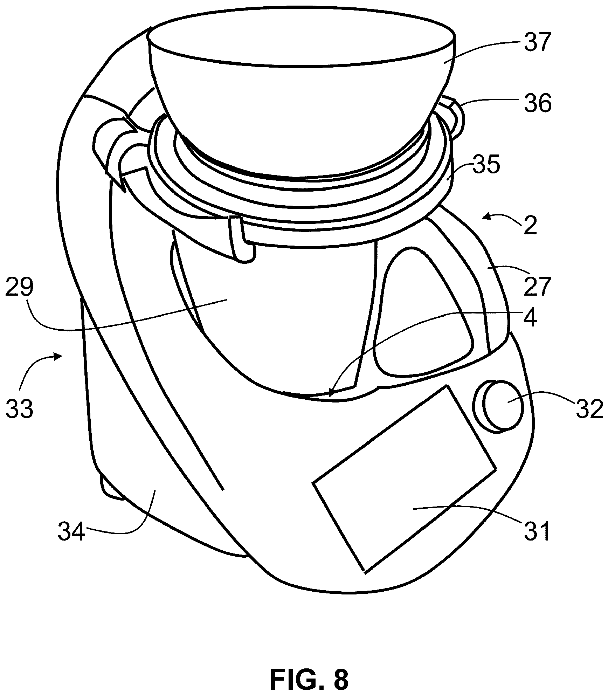

Die Figur 8 zeigt eine Küchenmaschine 33 mit einem Standteil 34. Die Stellfläche des Standteils 33 ist größer als maximale Länge und Breite des eingesetzten Gefäßes 2 mit dem Behälter 29 und dem Griff 27. Das Standteil umfasst einen drehbaren Taster 32 und ein Display 31, mit denen die Küchenmaschine 33 bedient werden kann. Auf den Behälter 29 des Gefäßes 2 ist ein Deckel 35 aufgesetzt. Die Küchenmaschine 33 umfasst für das Verriegeln des Deckels 35 Klauen 36 eines motorisch angetriebenen Verriegelungsmechanismus, die durch eine Drehbewegung den Deckel 35 so verriegeln können, dass dieser nicht mehr abgenommen werden kann. Auf den Deckel 35 ist ein Aufsatzbehälter 37 aufgesetzt. In den Aufsatzbehälter 37 kann Dampf strömen und zwar durch eine Öffnung im Deckel 35 hindurch sowie durch eine Gitterstruktur im Boden des Aufsatzbehälters 37. Der Aufsatzbehälter 37 kann durch einen Deckel verschlossen werden, um Zutaten in dem Aufsatzbehälter 37 mit Dampf garen zu können.

Die Figur 8 verdeutlicht, dass das Gefäß 2 nicht frei von dem Standteil 34 der Küchenmaschine absteht. Damit ist gemeint, dass nicht nur ein unterer Bereich des Gefäßes 2 in die Ausnehmung 4 hinein reicht. Das Gefäß 2 wird zusätzlich gehalten und zwar vor allem im verriegelten Zustand des Deckels 35. Dadurch sind auch sehr hohe Drehgeschwindigkeiten möglich.

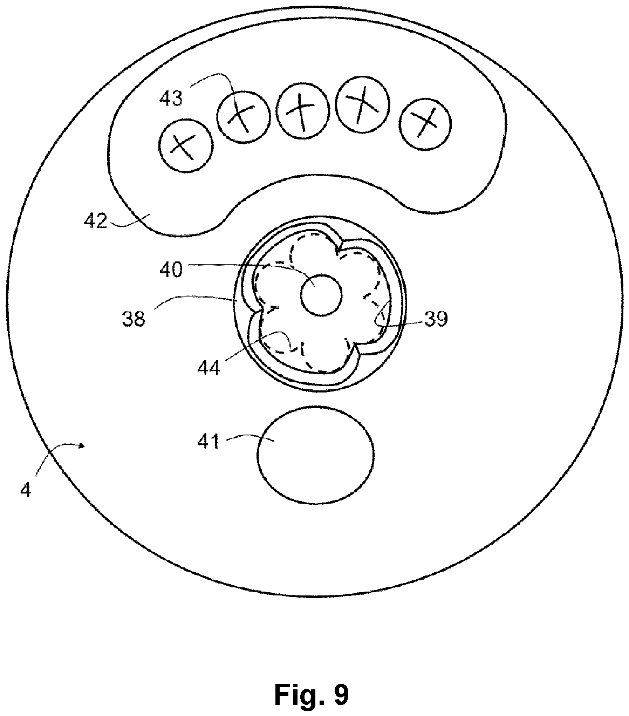

Die Figur 9 zeigt eine Aufsicht in die Ausnehmung 4 des Standteils des Rührgeräts hinein. Beim Grund der Ausnehmung 4 ist Kupplungselement 38 vorhanden. Das Kupplungselement ist mit der Welle des dahinter befindlichen elektrischen Antriebs des Rührgerätes fest verbunden. Der elektrische Antrieb kann daher das Kupplungselement 38 drehen. Die Kupplung 38 hat eine Ausnehmung mit drei seitlichen Einbuchtungen 39 und eine ringförmige Mulde 40 in der Mitte der Kupplung.

Innerhalb der Ausnehmung 4 ist beim Grund ein Kanal 41 vorhanden, durch den hindurch eine Flüssigkeit nach unten aus dem Standteil des Rührgeräts hinauslaufen kann. Hinter einer elastischen Membran 42 befinden sich elektrische Kontakte und zwar in Form von Buchsen. Oberhalb der elektrischen Kontakte gibt es in der Membran 42 Schlitze 43, durch die hindurch elektrische Stecker des Gefäßes gesteckt werden können, um mit den Buchsen verbunden zu werden. Es sind insgesamt fünf elektrische Kontakte zur Stromzuführung zur Heizeinrichtung des Gefäßes sowie für eine Sensorik vorhanden, um das Heizen des Gefäßes steuern zu können. Durch das Steuern kann das Gefäß auf gewünschte Temperaturen gebracht werden.

Die Welle des Rührwerkzeugs hat ein Kupplungselement, welches allerdings sechs Vorsprünge 44 aufweist, wie dies durch eine gestrichelte Linie in der Figur 9 angedeutet wird. Die Vorsprünge 44 reichen paarweise in die Einbuchtungen 39 hinein, wenn das Gefäß in die Ausnehmung 4 eingesetzt ist. Das Kupplungselement mit den sechs Vorsprüngen 44 kann daher so in das Kupplungselement mit den drei Einbuchtungen 38 eingesetzt werden, dass die beiden Kupplungselemente dann drehfest miteinander verbunden sind. Eine Drehbewegung des Kupplungselements mit den Einbuchtungen 38 dreht dann das Rührwerkzeug. Die Zahl der Einbuchtungen 38 kann auch größer oder kleiner sein. Entsprechend verändert sich dann die Zahl der Vorsprünge 44 beim Kupplungselement des Rührwerkzeugs derart, dass Vorsprünge 44 paarweise in die Einbuchtungen 39 hineinreichen können. Da das maximale Drehmoment, welches das Rührgerät zu leisten vermag, gering ist, kann die Zahl der Einbuchtungen gering sein im Vergleich zu der Zahl der Vorsprünge. Die geringere Zahl der Einbuchtungen erhöht jedoch vorteilhaft die Flexibilität für ein Zusammenspiel mit anderen Kupplungselementen, um das Standteil des Rührgeräts auch anders einsetzen zu können.

Die Welle des Rührwerkzeugs kann in die Mulde 40 hineinreichen, um so eine Zentrierung zu erleichtern.

Die in der Figur 8 gezeigte Küchenmaschine 33 weist ein Kupplungselement mit sechs Einbuchtungen beim Grund ihrer Ausnehmung 4 auf, wenn das Kupplungselement des Rührwerkzeugs sechs Vorsprünge 44 aufweist. Die Zahl der Einbuchtungen und Vorsprünge kann auch größer oder kleiner sein. In jede Einbuchtung beim Kupplungselement der Küchenmaschine reicht ein Vorsprung 44 des Kupplungselements des Rührwerkzeugs hinein, wenn das Gefäß 2 in die Ausnehmung 4 der Küchenmaschine eingesetzt ist. Hierdurch ist es möglich, ein besonders großes Drehmoment auf das Rührwerkzeug zu übertragen. Dies kann im Fall der Küchenmaschine erforderlich sein. Ansonsten kann der Grund der Ausnehmung 4 im Fall des Standteils 34 der Küchenmaschine 33 mit dem in der Figur 9 gezeigten Grund der Ausnehmung 4 übereinstimmen.

## Patentansprüche

1. System umfassend ein Standteil (34) einer Küchenmaschine (33) und ein Standteil (1) eines Rührgeräts und mindestens ein Gefäß (2) mit einem darin befindlichen Rührwerkzeug (5), wobei das Gefäß (2) sowohl Teil der Küchenmaschine (33) als auch als Teil des Rührgeräts sein kann, wobei die maximal mögliche Drehgeschwindigkeit, mit der das Standteil (34) der Küchenmaschine (33) das Rührwerkzeug (5) drehen kann, wenigstens fünfmal größer als ist als die maximal mögliche Drehgeschwindigkeit, mit der das Standteil (1) des Rührgeräts das Rührwerkzeug (5) drehen kann.

2. System nach dem vorhergehenden Anspruch, **dadurch gekennzeichnet, dass** die maximal mögliche Drehgeschwindigkeit des Rührwerkzeugs (5) 1000 Umdrehungen pro Minute, vorzugsweise 400 Umdrehungen pro Minute, besonders bevorzugt 220 Umdrehungen pro Minute, beträgt, mit der das Standteil (1) des Rührgeräts das Rührwerkzeug (5) drehen kann.

3. System nach einem der vorhergehenden Ansprüche, **dadurch gekennzeichnet, dass** das Standteil (34) der Küchenmaschine (33) das Rührwerkzeug (5) mit wenigstens 5000 Umdrehungen pro Minute, besonders bevorzugt mit wenigstens 8000 Umdrehungen pro Minute, drehen kann.

4. System nach einem der vorhergehenden Ansprüche, **dadurch gekennzeichnet, dass** das Standteil (34) der Küchenmaschine (33) das Rührwerkzeug (5) mit nicht mehr als 15000 Umdrehungen pro Minute drehen kann.

5. System nach einem der vorhergehenden Ansprüche, **dadurch gekennzeichnet, dass** die Küchenmaschine (33) einen Deckel (35) für das Gefäß (2) umfasst und einen Verriegelungsmechanismus (36), durch den der Deckel (35) verriegelt werden kann, wenn der Deckel (35) das Gefäß (2) verschließt.

6. System nach einem der vorhergehenden Ansprüche, **dadurch gekennzeichnet, dass** das Rührgerät einen Deckel (35) für das Gefäß (2) umfasst, aber keinen Verriegelungsmechanismus (36), durch den der Deckel (35) verriegelt werden kann, wenn der Deckel (35) das Gefäß (2) verschließt.

7. System nach einem der vorhergehenden Ansprüche, **dadurch gekennzeichnet, dass** das Standteil (34) der Küchenmaschine (33) und/oder das Standteil (1) des Rührgeräts so eingerichtet sind, dass die Drehzahlen der Drehgeschwindigkeit für das Rührwerkzeug (5) nur stufenförmig verstellt werden können.

8. System nach dem vorhergehenden Anspruch, **dadurch gekennzeichnet, dass** es beim Standteil (1) des Rührgeräts nicht mehr als drei einstellbare Stufen für die Drehgeschwindigkeit für das Rührwerkzeug (5) gibt.

9. System nach einem der zwei vorhergehenden Ansprüche, **dadurch gekennzeichnet, dass** es beim Standteil (34) der Küchenmaschine (33) mehr als drei einstellbare Stufen für die Drehgeschwindigkeit für das Rührwerkzeug (5) gibt, wobei es vorzugsweise wenigstens acht einstellbare Stufen für die Drehgeschwindigkeit gibt.

10. System nach einem der drei vorhergehenden Ansprüche, **dadurch gekennzeichnet, dass** es bei dem Standteil (34) der Küchenmaschine (33) gleiche Stufen für die Einstellung einer Drehgeschwindigkeit wie bei dem Standteil (1) des Rührgeräts gibt.

11. System nach einem der vorhergehenden Ansprüche, **dadurch gekennzeichnet, dass** das Rührwerkzeug (5) eine Drucksicherung umfasst.

12. System nach einem der vorhergehenden Ansprüche, **dadurch gekennzeichnet, dass** das Standteil (1) des Rührgeräts eine Steuerung für eine Begrenzung des Drehmoments für seinen Antrieb (8) aufweist.

13. System nach einem der vorhergehenden Ansprüche, **dadurch gekennzeichnet, dass** das Standteil (1) des Rührgeräts eine Ausnehmung (4) aufweist, in die das Gefäß (2) des Rührgeräts eingesetzt werden kann, und einen elektrischen Antrieb (8) für ein Drehen des im Gefäß (2) vorhandenen Rührwerkzeugs (5), wobei das Standteil (1) des Rührgeräts so eingerichtet ist, dass das Standteil (1) des Rührgeräts das im Gefäß (2) befindliche Rührwerkzeug (5) mit nicht mehr als 300 Umdrehungen pro Minute drehen kann, und das Drehmoment, mit der das Rührwerkzeug (5) durch das Standteil (1) des Rührgeräts gedreht werden kann, nicht mehr als 0,4 N*m betragen kann.

14. System nach dem vorhergehenden Anspruch, **dadurch gekennzeichnet, dass** das Standteil (1) des Rührgeräts elektrische Kontakte für ein Erhitzen des Gefäßes (2) aufweist, die mit elektrischen Kontakten (30) an der Unterseite des Gefäßes (2) verbunden sind, wenn das Gefäß (2) in die Ausnehmung (4) eingesetzt ist, und eine Einrichtung, mit dem eine Drehgeschwindigkeit für ein Rührwerkzeug (5) eingestellt werden kann und eine Temperatur für ein Erhitzen des Gefäßes (2).

15. System nach einem der vorhergehenden Ansprüche, **dadurch gekennzeichnet, dass** der elektrische Antrieb einen Schrittmotor (8) umfasst.

## Claims

1. System comprising a stand part (34) of a food processor (33) and a stand part (1) of a mixing device and at least one vessel (2) with a mixing tool (5) located therein, wherein the vessel (2) can be both part of the food processor (33) and as part of the stirring device, wherein the maximum possible rotational speed at which the stand part (34) of the food processor (33) can rotate the mixing tool (5) is at least five times greater than the maximum possible rotational speed at which the stand part (1) of the mixing device can rotate the mixing tool (5).

2. System according to the preceding claim, **characterized in that** the maximum possible rotational speed of the mixing tool (5) is 1000 revolutions per minute, preferably 400 revolutions per minute, particularly preferably 220 revolutions per minute, with which the stand part (1) of the mixing device can rotate the mixing tool (5).

3. System according to one of the preceding claims, **characterized in that** the stand part (34) of the food processor (33) can rotate the mixing tool (5) with at least 5000 revolutions per minute, particularly preferably with at least 8000 revolutions per minute.

4. System according to one of the preceding claims, **characterized in that** the stand part (34) of the food processor (33) can rotate the mixing tool (5) with not more than 15000 revolutions per minute.

5. System according to one of the preceding claims, **characterized in that** the food processor (33) comprises a lid (35) for the vessel (2) and a locking mechanism (36) by means of which the lid (35) can be locked when the lid (35) closes the vessel (2).

6. System according to one of the preceding claims, **characterized in that** the mixing device comprises a lid (35) for the vessel (2), but no locking mechanism (36) by which the lid (35) can be locked when the lid (35) closes the vessel (2).

7. System according to one of the preceding claims, **characterized in that** the stand part (34) of the food processor (33) and/or the stand part (1) of the mixing device are configured in such a way that the rpm of the rotational speeds for the mixing tool (5) can be adjusted only in a stepped manner.

8. System according to the preceding claim, **characterized in that** in the stand part (1) of the mixing device there are no more than three adjustable steps for the rotational speed for the mixing tool (5).

9. System according to one of the two preceding claims, **characterized in that** in the stand part (34) of the food processor (33) there are more than three adjustable steps for the rotational speed for the mixing tool (5), wherein there are preferably at least eight adjustable steps for the rotational speed.

10. System according to one of the three preceding claims, **characterized in that** there are same steps for setting a rotational speed in the stand part (34) of the food processor (33) as in the stand part (1) of the mixing device.

11. System according to one of the preceding claims, **characterized in that** the mixing tool (5) comprises a pressure safety device.

12. System according to one of the preceding claims, **characterized in that** the stand part (1) of the mixing device comprises a control for limiting the torque for its drive (8).

13. System according to one of the preceding claims, **characterized in that** the stand part (1) of the mixing device has a recess (4) into which the vessel (2) of the mixing device can be inserted, and an electric drive (8) for rotating the mixing tool (5) present in the vessel (2), wherein the stand part (1) of the mixing device is configured such that the stand part (1) of the mixing device can rotate the mixing tool (5) present in the vessel (2) with not more than 300 revolutions per minute, and the torque with which the mixing tool (5) can be rotated by the stand part (1) of the mixing device can be not more than 0.4 N*m.

14. System according to the preceding claim, **characterized in that** the stand part (1) of the mixing device comprises electrical contacts for heating the vessel (2), which are connected to electrical contacts (30) on the underside of the vessel (2) when the vessel (2) is inserted into the recess (4), and means for setting a rotational speed for a mixing tool (5) and a temperature for heating the vessel (2).

15. System according to one of the preceding claims, **characterized in that** the electric drive comprises a stepper motor (8).

## Revendications

1. Système comprenant une partie de support (34) d'un robot de cuisine (33) et une partie de support (1) d'un appareil de remuage et au moins un récipient (2) avec un outil de remuage (5) situé à l'intérieur, le récipient (2) pouvant faire partie du robot de cuisine (33) ainsi que de l'appareil de remuage, la vitesse de rotation maximale possible à laquelle la partie de support (34) du robot de cuisine (33) peut faire tourner l'outil de remuage (5) est au moins cinq fois supérieure à la vitesse de rotation maximale possible à laquelle la partie de support (1) de l'appareil de remuage peut faire tourner l'outil de remuage (5).

2. Système selon la revendication précédente, **caractérisé en ce que** la vitesse de rotation maximale possible de l'outil de remuage (5) est de 1000 tours par minute, de préférence 400 tours par minute, de manière particulièrement préférée 220 tours par minute, à laquelle la partie de support (1) de l'appareil de remuage peut faire tourner l'outil de remuage (5).

3. Système selon l'une des revendications précédentes, **caractérisé en ce que** la partie de support (34) du robot de cuisine (33) peut faire tourner l'outil de remuage (5) à au moins 5000 tours par minute, de préférence à au moins 8000 tours par minute.

4. Système selon l'une des revendications précédentes, **caractérisé en ce que** la partie de support (34) du robot de cuisine (33) peut faire tourner l'outil de remuage (5) à une vitesse ne dépassant pas 15000 tours par minute.

5. Système selon l'une quelconque des revendications précédentes, **caractérisé en ce que** le robot de cuisine (33) comprend un couvercle (35) pour le récipient (2) et un mécanisme de verrouillage (36) par lequel le couvercle (35) peut être verrouillé lorsque le couvercle (35) ferme le récipient (2).

6. Système selon l'une quelconque des revendications précédentes, **caractérisé en ce que** l'appareil de remuage comprend un couvercle (35) pour le récipient (2), mais ne comprend pas de mécanisme de verrouillage (36) par lequel le couvercle (35) peut être verrouillé lorsque le couvercle (35) ferme le récipient (2).

7. Système selon l'une des revendications précédentes, **caractérisé en ce que** la partie de support (34) du robot de cuisine (33) et/ou la partie de support (1) de l'appareil de remuage sont agencées de manière à ce que la vitesse de rotation de l'outil de remuage (5) ne puisse être réglée que par niveaux.

8. Système selon la revendication précédente, **caractérisé en ce que** la partie de support (1) de l'appareil de remuage ne comporte pas plus de trois niveaux réglables pour la vitesse de rotation de l'outil mélangeur (5).

9. Système selon l'une des deux revendications précédentes, **caractérisé en ce que**, dans la partie de support (34) du robot de cuisine (33), il y a plus de trois niveaux réglables pour la vitesse de rotation de l'outil de remuage (5), de préférence il y a au moins huit niveaux réglables pour la vitesse de rotation.

10. Système selon l'une des trois revendications précédentes, **caractérisé en ce qu'**il existe, pour la partie de support (34) du robot de cuisine (33), des niveaux de réglage d'une vitesse de rotation identiques à ceux de la partie de support (1) de l'outil de remuage.

11. Système selon l'une quelconque des revendications précédentes, **caractérisé en ce que** l'outil de remuage (5) comprend une sécurité contre la pression.

12. Système selon l'une des revendications précédentes, **caractérisé en ce que** la partie de support (1) de l'appareil de remuage comporte une commande de limitation du couple de rotation de son entraînement (8).

13. Système selon l'une quelconque des revendications précédentes, **caractérisé en ce que** la partie de support (1) de l'appareil de remuage présente un évidement (4) dans lequel le récipient (2) de l'appareil de remuage peut être inséré, et un entraînement électrique (8) pour une rotation de l'outil de remuage (5) présent dans le récipient (2), la partie de support (1) de l'appareil de remuage est agencée de telle sorte que la partie de support (1) de l'appareil de remuage peut faire tourner l'outil de remuage (5) se trouvant dans le récipient (2) à une vitesse ne dépassant pas 300 tours par minute, et le couple avec lequel l'outil de remuage (5) peut être tourné par la partie de support (1) de l'appareil de remuage ne peut pas être supérieur à 0,4 N*m.

14. Système selon la revendication précédente, **caractérisé en ce que** la partie de support (1) de l'appareil de remuage comporte des contacts électriques pour un chauffage du récipient (2), qui sont connectés à des contacts électriques (30) sur le côté inférieur du récipient (2) lorsque le récipient (2) est inséré dans l'évidement (4), et un moyen avec lequel une vitesse de rotation pour un outil de remuage (5) peut être réglée et une température pour un chauffage du récipient (2).

15. Système selon l'une des revendications précédentes, **caractérisé en ce que** l'entraînement électrique comprend un moteur pas à pas (8).
